(19) Europäisches Patentamt / European Patent Office / Office européen des brevets

(11) **EP 2 782 052 A1**

(12) **EUROPEAN PATENT APPLICATION**

(43) Date of publication:
**24.09.2014 Bulletin 2014/39**

(51) Int Cl.:
*G06Q 10/04* (2012.01)     *G06Q 50/04* (2012.01)

(21) Application number: **14152265.6**

(22) Date of filing: **23.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2013 JP 2013056241**

(71) Applicant: **FUJITSU LIMITED**
**Kawasaki-shi,**
**Kanagawa 211-8588 (JP)**

(72) Inventor: **Yoshimura, Ryusuke**
**Kanagawa, 243-0018 (JP)**

(74) Representative: **HOFFMANN EITLE**
**Patent- und Rechtsanwälte**
**Arabellastrasse 4**
**81925 München (DE)**

(54)     **Method of calculating assembly time and assembly time calculating device**

(57)     A program causing a computer to execute a process, the process includes: acquiring animation data for displaying steps of assembling a product on a display with an animation; detecting change in a viewpoint of an animation from the acquired animation data (S2213); and calculating an estimate of an assembly time of the product based on the detected change in the viewpoint of the animation (S2219).

FIG. 17

EP 2 782 052 A1

**Description**

FIELD

A certain aspect of embodiments described herein relates to a method of calculating an assembly time and an assembly time calculating device.

BACKGROUND

There has been known technology for analyzing a procedure that eases an assembly work by simulating the assembly work of the product with a computer (see Japanese Patent Application Publication No. 9-300145 or International Patent Publication No. WO99/30258, for example). Moreover, there has been known technology for generating an animation showing the procedure of the assembly work in the simulation to help the evaluation of assembly easiness of the product (see Japanese Patent Application Publication No. 2007-200082, for example).

The animation generated by the computer simulation is used as a reference by workers when they actually assemble the product. Thus, when the position of the viewpoint from which the product is viewed changes in the animation, the posture or the standing position of the worker may change in the actual operation. When the posture or the standing position of the worker changes, the actual operation time may increase, and this causes the actual operation time to differ from the operation time calculated by the simulation.

SUMMARY

Accordingly, a method of calculating an assembly time and an assembly time calculating device have an objective of increasing the accuracy in the estimation of the assembly time calculated by a simulation.

According to an aspect of the present invention, there is provided a program causing a computer to execute a process, the process including: acquiring animation data for displaying steps of assembling a product on a display with an animation; detecting change in a viewpoint of an animation from the acquired animation data; and calculating an estimate of an assembly time of the product based on the detected change in the viewpoint of the animation.

According to another aspect of the present invention, there is provided a method of calculating an assembly time that calculates a product assembly time by a simulation, the method including: acquiring animation data for displaying steps of assembling a product on a display with an animation; detecting change in a viewpoint of an animation from the acquired animation data; and calculating an estimate of an assembly time of the product based on the detected change in the viewpoint of the animation.

According to another aspect of the present invention, there is provided an assembly time calculating device that calculates an assembly time of a product by a simulation, the assembly time calculating device including: an acquiring unit configured to acquire animation data for displaying steps of assembling the product on a display with an animation; a detecting unit configured to detect change in a viewpoint of an animation from the acquired animation data; and a calculating unit configured to calculate an estimate of the assembly time of the product based on the detected change in the viewpoint of the animation.

BRIEF DESCRIPTION OF DRAWINGS

FIG. 1 is a diagram illustrating input data to an information generating device;
FIG. 2 is a diagram illustrating an assembly tree;
FIG. 3 is a diagram illustrating an assembly;
FIG. 4 is a diagram illustrating a data structure of component information;
FIG. 5 is a diagram illustrating a data structure of assembly information;
FIG. 6 is a diagram illustrating a relative coordinate value and a relative orientation;
FIG. 7A is a diagram illustrating an equivalent manufacturing flow converted from the assembly tree illustrated in FIG. 2, and FIG. 7B is a diagram illustrating the manufacturing flow of FIG. 7A into which processes are inserted;
FIG. 8 is an explanatory diagram illustrating separated manufacturing flows obtained by separating the manufacturing flow of FIG. 7B by parent-child relationships;
FIG. 9 is a diagram illustrating a data structure of a node;
FIG. 10 is a diagram illustrating a list structure of the separated manufacturing flow;
FIG. 11 is a block diagram illustrating a hardware configuration of the information generating device;
FIG. 12 is a block diagram illustrating a functional configuration of the information generating device;

FIG. 13 is a diagram for explaining a process by a generating unit and a calculating unit;

FIG. 14 is a diagram illustrating a bounding box;

FIG. 15A and FIG. 15B are explanatory diagrams illustrating an interference judgment;

FIG. 16 is a diagram illustrating movement amount setting;

FIG. 17 is a diagram for explaining a first animation;

FIG. 18A is a diagram illustrating a viewpoint direction when a component M1 and a component M0 are assembled, and FIG. 18B is a diagram illustrating states before and after the assembly of the component M1 and the component M0 as viewed from the viewpoint direction;

FIG. 19 is a diagram illustrating a state in which a viewpoint position is set in a direction different from the viewpoint position illustrated in FIG. 18A;

FIG. 20 is a diagram illustrating change in the line of sight;

FIG. 21 is a diagram illustrating a standard time calculating table;

FIG. 22 is a diagram for explaining a worker visual range and a worker sight line angle;

FIG. 23 is a diagram for explaining a zenith angle, an azimuth angle, and an operation order gazing point distance;

FIG. 24A and FIG. 24B are diagrams for explaining a viewpoint angle, FIG. 24A is a diagram illustrating an initial state before the viewpoint angle is set, and FIG. 24B is a diagram illustrating a state after the viewpoint angle is set;

FIG. 25 is a flowchart illustrating a process procedure of an information generating process by the information generating device;

FIG. 26 is a flowchart illustrating a process procedure of an information setting process;

FIG. 27 is a flowchart illustrating a process procedure of a standard time calculating process (No. 1); and

FIG. 28 is a flowchart illustrating the process of the standard time calculating process (No. 2).

## DESCRIPTION OF EMBODIMENTS

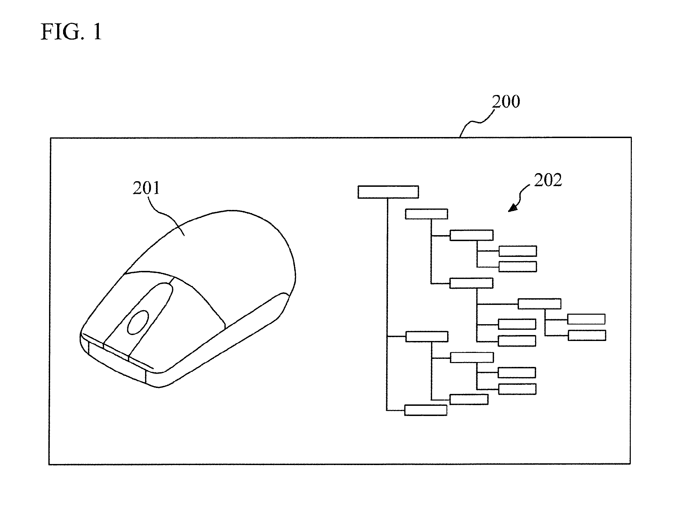

Hereinafter, with reference to FIG. 1 through FIG. 28, a description will be given of an information generating device that calculates an estimate of an assembly time of a product by a simulation.

<Example of input data>

FIG. 1 is an explanatory diagram illustrating animation data input to the information generating device (hereinafter, referred to as input data). Input data 200 is data transmitted from, for example, a three-dimensional CAD (Computer Aided Design) system. FIG. 1 illustrates the input data 200 of a mouse.

The input data 200 includes a three-dimensional model 201 of a target product (a mouse in FIG. 1) that is to be the subject of information generation, and an assembly tree 202 of the three-dimensional model 201. The assembly tree 202 is hierarchically structured information representing configurations of assemblies and components making up the three-dimensional model 201. The assembly is a collective component or a finished product made by assembling multiple components. The combination of components making up the assembly can be identified from the assembly tree 202. In addition, the component is a minimum unit that can not be further disassembled. The components and assemblies are collectively referred to as a model.

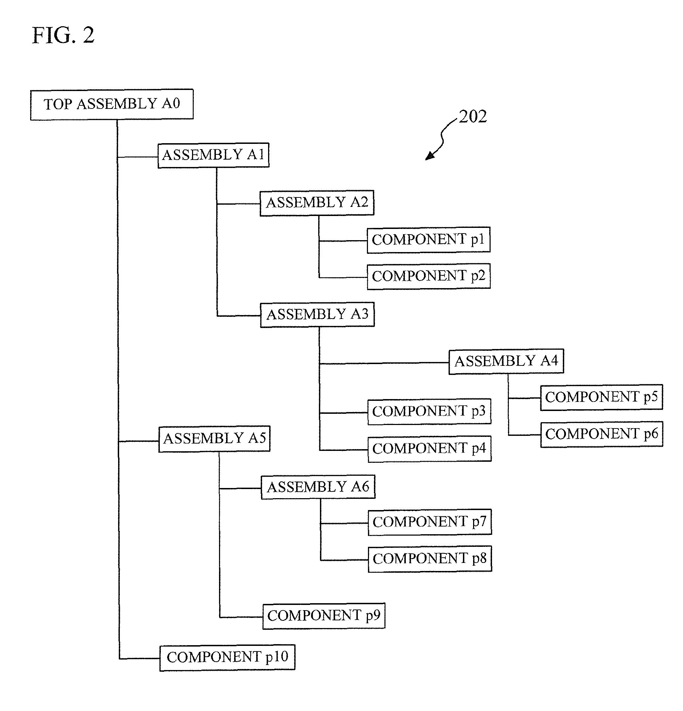

FIG. 2 is a diagram illustrating the assembly tree 202 illustrated in FIG. 1. In FIG. 2, a top assembly A0 represents a mouse (finished product) that is the three-dimensional model 201. In FIG. 2, the top assembly A0 includes assemblies A1, A5 and a component p10. The assembly A1 includes assemblies A2 and A3, and the assembly A2 includes components p1 and p2. In addition, an assembly in the next higher hierarchy is referred to as a parent assembly. For example, the parent assembly of the assembly A2 is the assembly A1. An assembly in the next lower hierarchy is referred to as a child assembly. For example, the child assembly of the assembly A1 is the assemblies A2, A3.

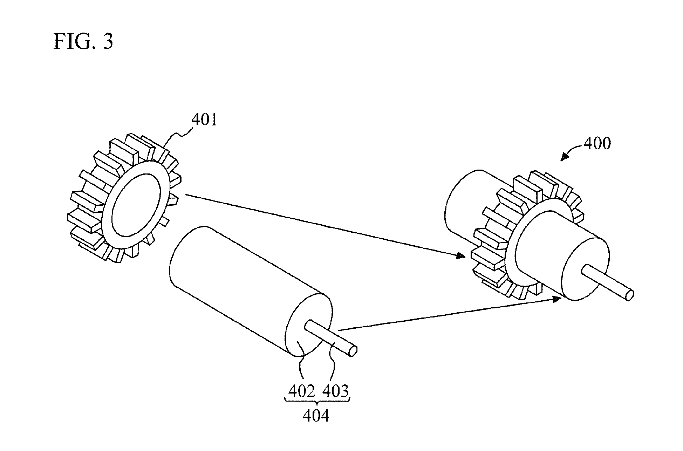

FIG. 3 is an explanatory diagram illustrating the assembly. In FIG. 3, an assembly 400 includes a gear 401 and an assembly 404 of shafts 402, 403.

<Example of a data structure of component information>

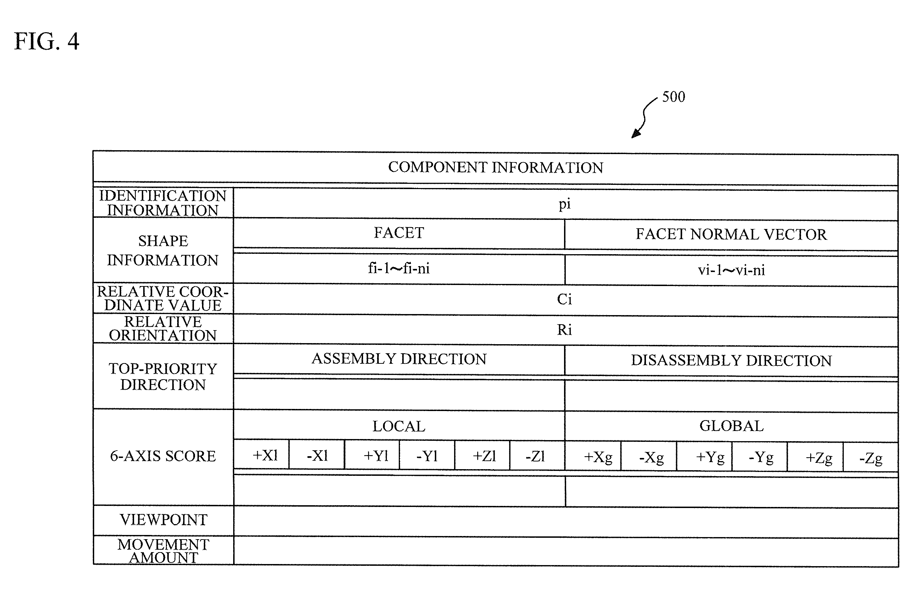

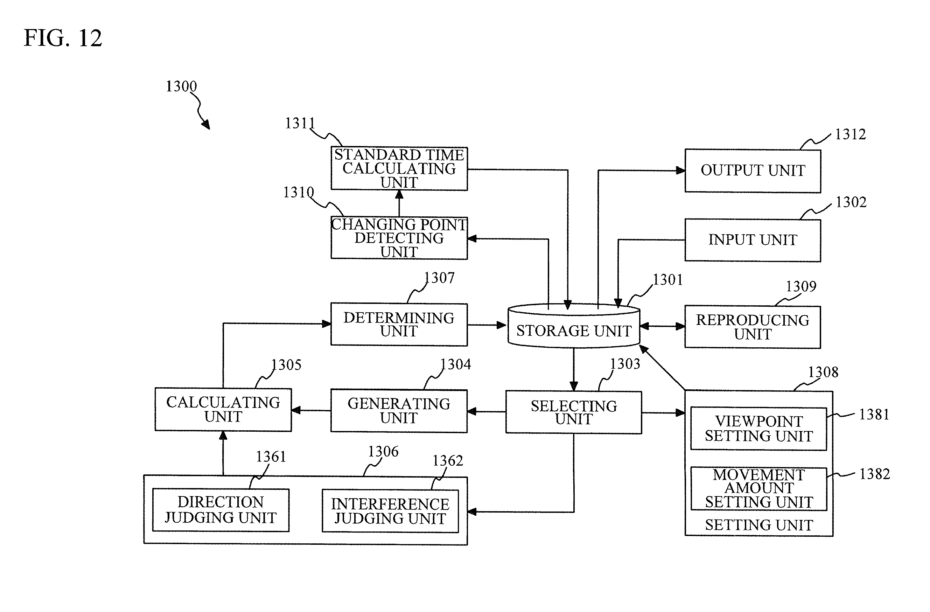

FIG. 4 is an explanatory diagram illustrating the data structure of the component information. Component information 500 is information belonging to components in the three-dimensional model, and is information extracted from the obtained input data 200 by the information generating device. The information generating device stores the component information 500 extracted from the input data 200 in a storage unit 1301 illustrated in FIG. 12. In FIG. 4, the component information 500 includes an identification information field, a shape information field, a relative coordinate value field, a relative orientation field, a top-priority direction field, a 6-axis score field, a viewpoint field, and a movement amount field.

The identification information field stores the identification information that uniquely identifies a component. In FIG. 4, pi is stored as the identification information.

The shape information field includes a facet field and a facet normal vector field. The facet is polygon data (side data) of a triangle used to represent a stereoscopic shape of a component, and the facet field stores facets of the component. The component information 500 illustrated in FIG. 4 stores ni facets fi-1 to fi-ni. Each of the facets fi-1 to fi-ni stores triangle vertex coordinate values based on a local coordinate system of the component. The facet normal vector field stores ni normal vectors vi-1 to vi-ni for the facets fi-1 to fi-ni.

The relative coordinate value field stores a relative coordinate value from an origin of a parent assembly in the local coordinate system of the parent assembly (a global coordinate system when the parent assembly is the top assembly A0). In FIG. 4, a relative coordinate value Ci is stored. The relative orientation field stores a relative orientation Ri from an orientation of a parent assembly in the local coordinate system of the parent assembly (the global coordinate system when the parent assembly is the top assembly A0). The relative orientation Ri is expressed by a three-by-three matrix.

The top-priority direction field includes an assembly direction field and a disassembly direction field. At the stage of acquiring the input data 200, nothing is stored in the assembly direction field and the disassembly direction. When the assembly direction and the disassembly direction are detected, the detected directions are stored.

The 6-axis score field includes fields of the axes of the local coordinate system (+X1 to -Z1) and fields of the axes of the global coordinate system (+Xg to -Zg). At the stage of acquiring the input data 200, nothing is stored in the 6-axis score field. When the 6-axis score is calculated, the calculated score is stored. The 6-axis score is an index value indicating the suitability of each axis as the assembly direction. In the present embodiment, a higher score is assumed to indicate better suitability. The calculation of the 6-axis score will be described later.

The viewpoint field stores a coordinate value representing a viewpoint position. The viewpoint position determines a direction in which the animation of the assembly and the component is displayed. That is to say, the assembly and the component viewed from the direction of the viewpoint position are displayed as the animation. In addition, when the model is moved in the disassembly direction, if the disassembly direction is identical to the viewpoint direction, the movement in the disassembly direction is less visible even when the animation of the disassembly state is reproduced. Therefore, a viewpoint coordinate value of a shifted viewpoint position is stored and when the animation of the disassembly state is reproduced, the animation is displayed in the viewpoint direction from the viewpoint coordinate value so as to facilitate visibility.

<Example of a data structure of assembly information>

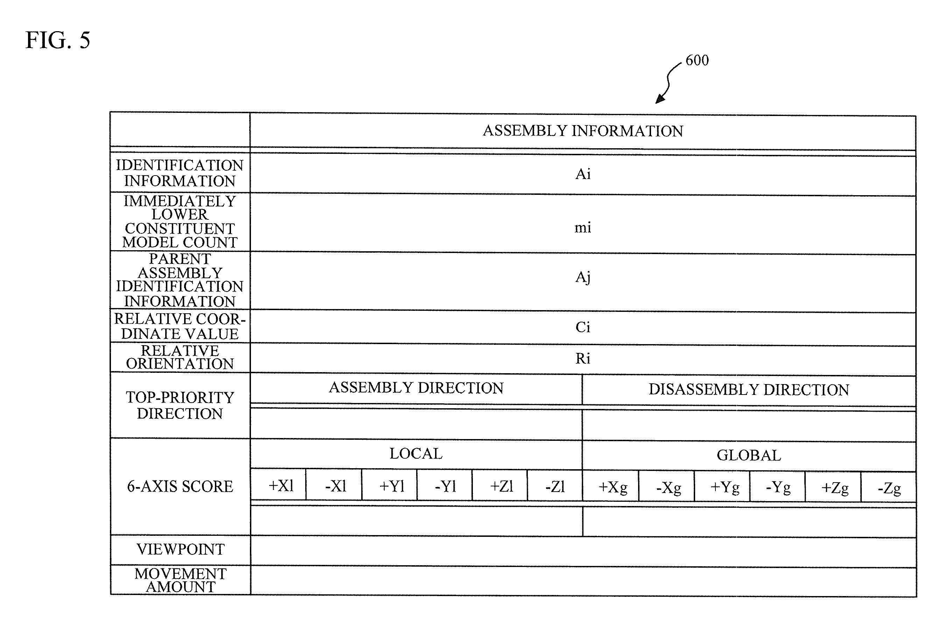

FIG. 5 is an explanatory diagram illustrating a data structure of assembly information. Assembly information 600 is information belonging to assemblies in the three-dimensional model and is information extracted from the input data 200 by the information generating device. In FIG. 5, the assembly information 600 includes an identification information field, an immediately lower constituent model count field, parent assembly identification information, a relative coordinate value field, a relative orientation field, a top-priority direction field, a 6-axis score field, a viewpoint field, and a movement amount field. The fields other than the immediately lower constituent model count field and the parent assembly identification information are the same as those in the component information 500 and will not be described.

The immediately lower constituent model count field stores an immediately lower constituent model count mj. The immediately lower constituent model count is the number of constituent models in the next lower hierarchy of the target assembly. Even if located in the next lower hierarchy, a model other than a constituent model is not counted. For example, in the case of the assembly A3 illustrated in FIG. 2, although the assembly A4 and the components p3 to p6 are in the next lower hierarchy of the assembly A3, the constituent models in the next lower hierarchy of the assembly A3 are the assembly A4 and the components p3, p4. Therefore, the immediately lower constituent model count mj in the case of the assembly A3 is mj = 3. In addition, the parent assembly identification information stores parent assembly identification information Aj. For example, in the case of the assembly A3, the parent assembly is the assembly A1, and thus the parent assembly identification information stores A1. This enables the information generating device to identify parent-child relationships among assemblies.

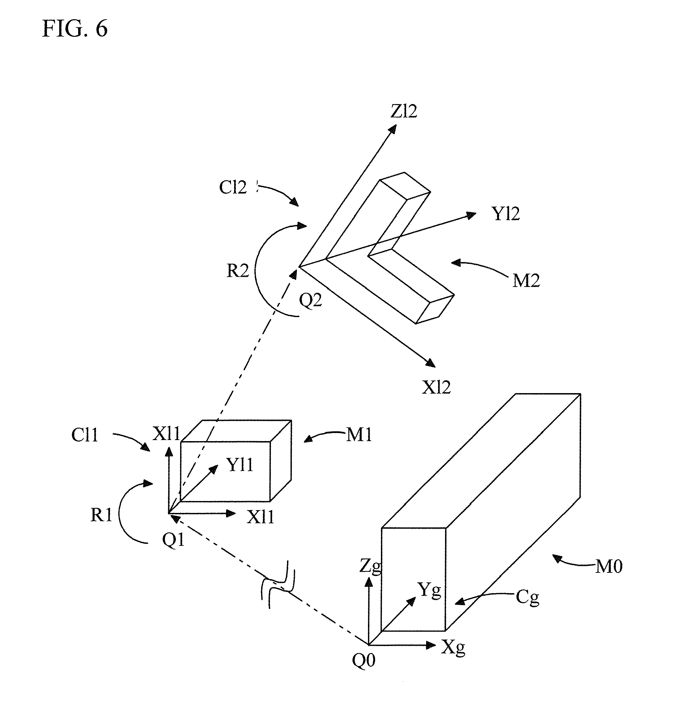

FIG. 6 is an explanatory diagram illustrating the relative coordinate value and the relative orientation illustrated in FIG. 4 and FIG. 5. Here, a description will be given of the relative coordinate value and the relative orientation of a model M. In FIG. 6, a global coordinate system including an Xg axis, a Yg axis, and a Zg axis is defined as Cg. Q0 is the origin of the global coordinate system Cg. The global coordinate system Cg is a space that defines a model M0 that is the top assembly A0 illustrated in FIG. 2. The coordinate values of facets making up the model M0 are set based on the origin Q0.

Q1 is the origin of a local coordinate system C11 including an X11 axis, a Y11 axis, and a Z11 axis. The local coordinate system C11 is a space that defines a model M1 that is the assembly A1 having the top assembly A0 illustrated in FIG. 2 as a parent assembly. The origin Q1 of the local coordinate system C11 is determined by a relative position to the origin Q0 of the global coordinate system Cg. The coordinate values of facets making up the model M1 are set based on the origin Q1. In addition, a relative orientation R1 of the local coordinate system C11 is a relative orientation from the orientation of the model M0 in the global coordinate system Cg.

Q2 is the origin of a local coordinate system C12 including an X12 axis, a Y12 axis, and a Z12 axis. The local coordinate system C12 is a space that defines a model M2 that is the assembly A2 having the assembly A1 illustrated in FIG. 2 as a parent assembly. The origin Q2 of the local coordinate system C12 is determined by a relative position to the origin Q1 of the local coordinate system C11. The coordinate values of facets making up the model M2 are set based on the origin Q2. In addition, a relative orientation R2 of the local coordinate system C12 is a relative orientation from the orientation of the model M1 in the local coordinate system C11. As described above, a relative coordinate value of a model is set based on an origin determined by a relative position from the origin of a parent assembly, and an orientation of the model is set based on the orientation of the parent assembly.

<Conversion example of the assembly tree 202>

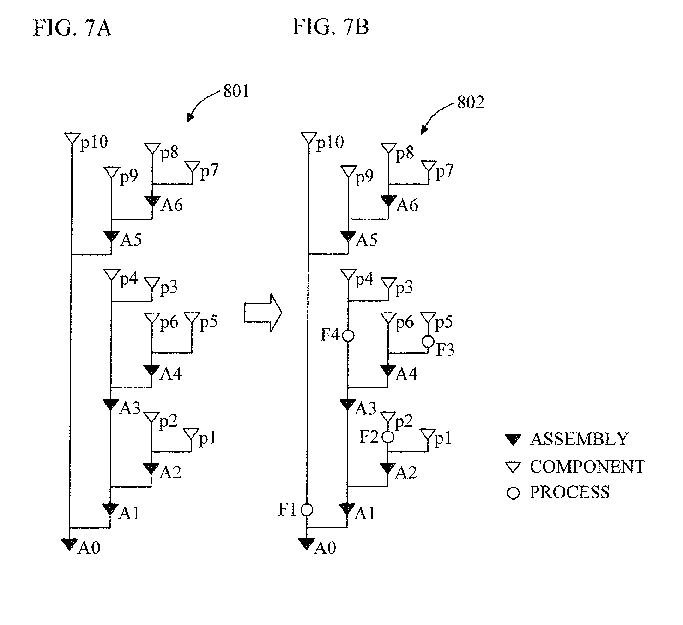

FIG. 7A and FIG. 7B are explanatory diagrams illustrating conversion examples of the assembly tree 202. FIG. 7A illustrates an equivalent manufacturing flow 801 converted from the assembly tree 202 illustrated in FIG. 2. The conversion into the manufacturing flow 801 may be performed manually or automatically. In the manufacturing flow 801 illustrated in FIG. 7A, the top-to-bottom direction indicates an assembly order such as combining the components p7 and p8 into the assembly A6 and combining the component p9 and the assembly A6 into the assembly A5, for example. Therefore, the opposite bottom-to-top direction indicates a disassembly order.

In a manufacturing flow 802 illustrated in FIG. 7B, processes are inserted at desired positions. The processes are inserted via user operation. The processes indicate operations necessary for assembling. For example, in FIG. 7B, the component p2 is subjected to a process F2 and then combined with the component p1 to obtain the assembly A2.

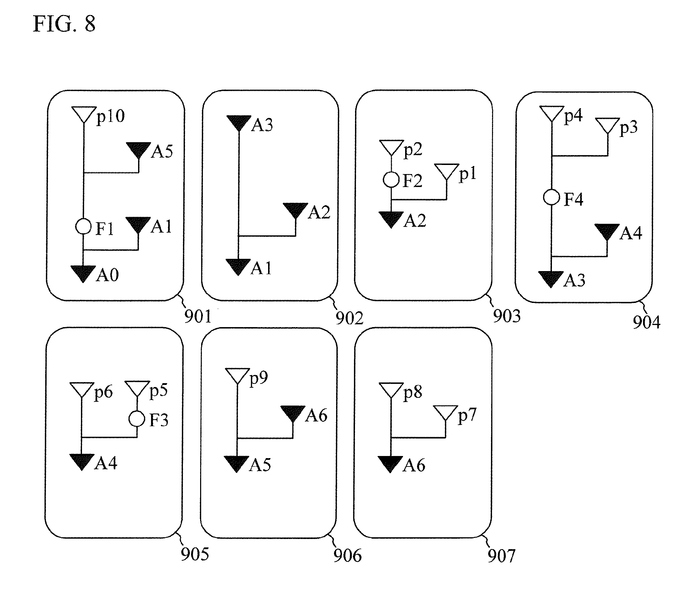

FIG. 8 is an explanatory diagram illustrating separated manufacturing flows 901 to 907 obtained by separating the manufacturing flow 802 illustrated in FIG. 7B based on parent-child relationships. For example, the separated manufacturing flow 902 is a flow illustrating assembly of the assemblies A2, A3 to generate the assembly A1. The separated manufacturing flow 903 is a flow illustrating assembly of the component p1 and the component p2 subjected to the process F2 to generate the assembly A2.

<List structure>

A description will next be given of a data structure of the manufacturing flow 802. In the present embodiment, the component information 500 and the assembly information 600 described above are managed in a list structure that links nodes. The node represents at least one of the component, the assembly, and the process in a manufacturing flow.

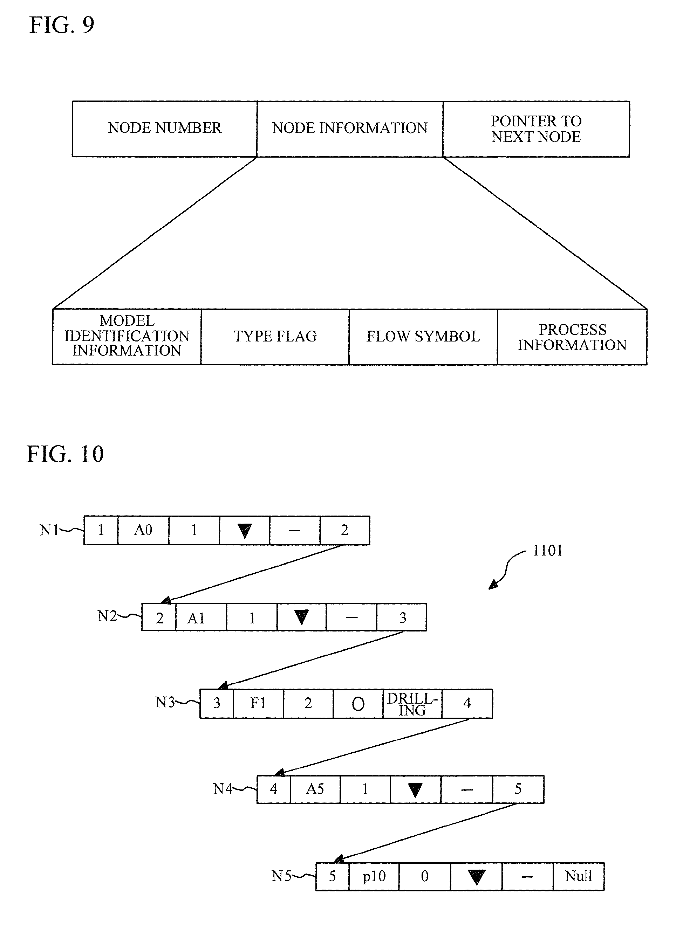

FIG. 9 is a diagram illustrating a data structure of a node. In FIG. 9, a node includes a node number, node information, and a pointer to next node. The node number is a number indicating an assembly order and is assigned sequentially from one according to the manufacturing flow 802. The ascending order of the node number indicates the assembly order and the reverse order thereof indicates the disassembly order.

The node information includes model identification information, a type flag, a flow symbol, and process information. The model identification information is identification information of the component or the assembly corresponding to the node. The model identification information can be used as a pointer to specify the component information 500 or the assembly information 600.

The type flag is a flag identifying the type (component, assembly, and process) of the node. For example, the type flags of component, assembly, and process are "0", "1", and "2", respectively. The flow symbol is a symbol illustrated in FIG. 7A to FIG. 8. The process information is a character string indicating details of a process when the type of the node is "process". The character string is input via user operation. The character string stores nothing when the type of the node is "component" or "assembly".

The pointer to next node stores the node number of the next node. As a result, the next node can be specified. A node is also specified from the next node. When the next node does not exist, the node is the last node and therefore, "Null" is stored.

FIG. 10 is an explanatory diagram illustrating a list structure of the separated manufacturing flow. A list structure 1101 illustrated in FIG. 10 is a list structure of the separated manufacturing flow 901 illustrated in FIG. 8, and nodes N1 to N5 are concatenated.

<Hardware configuration of the information generating device>

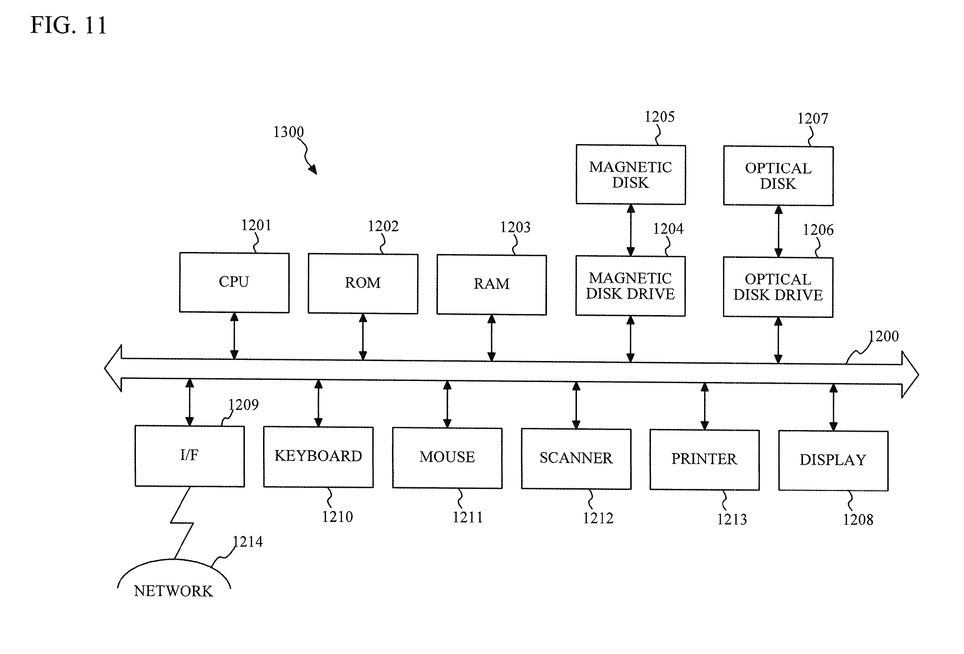

FIG. 11 is a block diagram illustrating a hardware configuration of an information generating device 1300.

The information generating device 1300 includes a CPU (Central Processing Unit) 1201. The CPU 1201 overall controls the information generating device 1300.

The information generating device 1300 includes a ROM (Read Only Memory) 1202. The ROM 1202 stores programs such as a boot program.

The information generating device 1300 includes a RAM (Random Access Memory) 1203. The RAM 1203 is used as a work area of the CPU 1201.

The information generating device 1300 includes a magnetic disk drive 1204 and a magnetic disk 1205. The magnetic disk drive 1204, under the control of the CPU 1201, controls the reading and writing of data with respect to the magnetic disk 1205. The magnetic disk 1205 stores data written under the control of the magnetic disk drive 1204.

The information generating device 1300 includes an optical disk drive 1206 and an optical disk 1207. The optical disk drive 1206, under the control of the CPU 1201, controls the reading and writing of the data with respect to the optical disk 1207. The optical disk 1207 stores data written under the control of the optical disk drive 1206, the data stored in the optical disk 1207 being read by a computer.

The information generating device 1300 includes a display 1208. The display 1208 displays data such as text, images, and functional information in addition to a cursor, icons, and tool boxes. A liquid crystal display or a plasma display may be employed as the display 1208.

The information generating device 1300 includes an interface (hereinafter, abbreviated as "I/F") 1209. The I/F 1209 is connected to a network 1214 such as a LAN (Local Area Network), a WAN (Wide Area Network), and the Internet through a communication line, and is connected to another device through the network 1214. The I/F 1209 administers an internal interface with the network 1214, and controls the input/output of data from/to external devices. A modem or a LAN adaptor may be employed as the I/F 1209.

The information generating device 1300 includes a keyboard 1210 and a mouse 1211. The keyboard 1210 includes keys for inputting letters, numerals, and various instructions and performs the input of data. Alternatively, a touch-panel-type input pad or numeric keypad may be adopted. The mouse 1211 is used to move a cursor, select a region, or move and change the size of windows. A track ball or a joy stick may be adopted as long as it has a function similar to a pointing device.

The information generating device 1300 includes a scanner 1212 and a printer 1213. The scanner 1212 optically reads an image and takes in the image data into the information generating device 1300. The scanner 1212 may have an optical character reader (OCR) function as well. The printer 1213 prints image data and text data. The printer 1213 may be, for example, a laser printer or an ink jet printer.

<Example of a functional configuration of the information generating device>

FIG. 12 is a block diagram illustrating a functional configuration of the information generating device 1300. The information generating device 1300 includes the storage unit 1301, an input unit 1302, a selecting unit 1303, a generating unit 1304, a calculating unit 1305, a judging unit 1306, and a determining unit 1307. The information generating device 1300 also includes a setting unit 1308, a reproducing unit 1309, a changing point detecting unit 1310, a standard time calculating unit 1311, and an output unit 1312.

For example, the function of the storage unit 1301 is implemented by a storage device such as the ROM 1202, the RAM 1203, the magnetic disk 1205, and the optical disk 1207 illustrated in FIG. 11. In addition, the functions of the input unit 1302 through the output unit 1312 are implemented by the CPU 1201 executing programs stored in a storage device such as the ROM 1202, the RAM 1203, the magnetic disk 1205, and the optical disk 1207 illustrated in FIG. 11.

The input unit 1302 receives data input. For example, the input unit 1302 receives the input of the three-dimensional model 201 and the assembly tree 202 as illustrated in FIG. 1. The input data 200 is stored in the storage unit 1301. The storage unit 1301 sequentially stores the component information 500 illustrated in FIG. 4, the assembly information 600 illustrated in FIG. 5, the manufacturing flow illustrated in FIG. 7B, and the list structure illustrated in FIG. 10.

The selecting unit 1303 selects a model from the storage unit 1301 that stores an assembly made from multiple models. In this example, a list structure of a separated manufacturing flow to be processed is assumed to have been specified. The selecting unit 1303 sequentially selects the models from the last node of the list structure. For example, in the case of the list structure 1101 illustrated in FIG. 10, the selecting unit 1303 sequentially selects models beginning from the last node N5 and thus, selects the component p10 as a selected model and then selects the assembly A5 of the node N4 as a selected model. Since the next node N3 is a process, no selection is made, and the selecting unit 1303 selects the assembly A1 of the node N2. After selection has been made from the leading node N1, the selecting operation ends since no models to be selected remain.

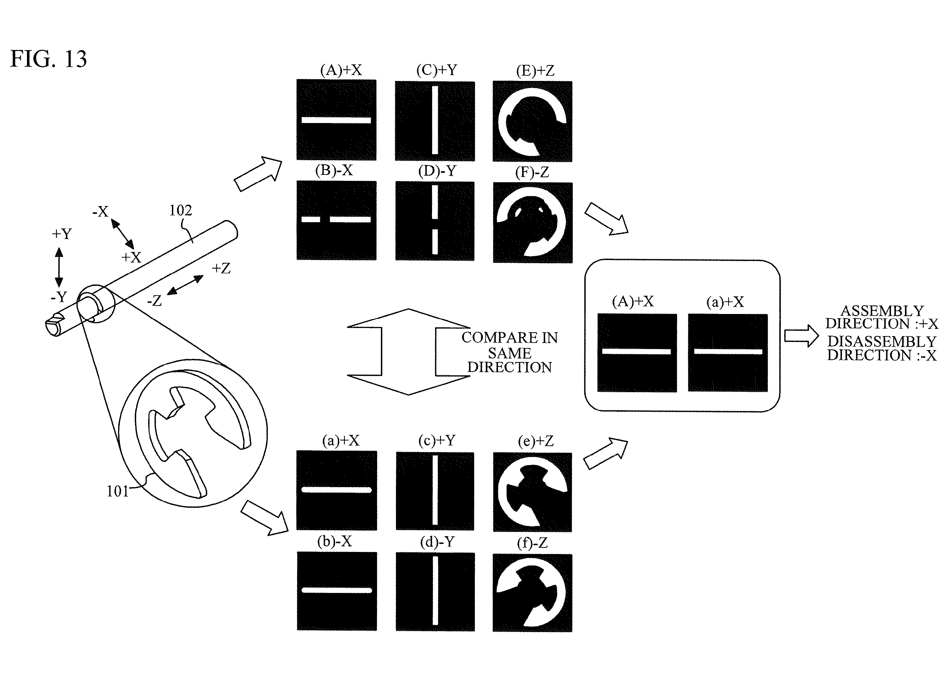

The generating unit 1304 projects the model selected by the selecting unit 1303 to a first area in a color different from the background color of the first area in multiple directions to generate first projection images. For example, the generating unit 1304 generates the first projection images of the selected model in the six directions (+X1 to -Z1) of the local coordinate system and the six directions (+Xg to -Zg) of the global coordinate system. The first area acting as the projection area is a bitmap image area of a predetermined size (e.g. 200×200 pixels) as illustrated in FIG. 13, for example. When the local coordinate system is identical to the global coordinate system, the generating unit 1304 generates the projection images in the six directions of either coordinate system. This prevents redundant processing from being performed and increases the speed of processing.

FIG. 13 illustrates the first projection images of the selected model in the six directions of the local coordinate system of the selected model. When the local coordinate system is identical to the global coordinate system, the generating unit 1304 generates projection images (a) to (f) as the first projection images. The axis direction of a shaft 102 illustrated in FIG. 13 is a Z axis direction (+Z, -Z), and a direction perpendicular to the axis direction is an X axis direction (+X, -X). The vertical direction perpendicular to the X axis and the Z axis is a Y axis direction (+Y, -Y). In this case, the selected model (an E-ring 101) is projected in a color (white) different from a background color (e.g. black). Therefore, the bits of projected portions of the selected model are counted. There may be a case in which the local coordinate system is not identical to the global coordinate system. For example, in the global coordinate system, a model may be obliquely assembled relative to the local coordinate system of the model. In such a case, the first and the second projection images are generated in 12 directions.

The generating unit 1304 projects the selected model onto a second area of an identical size to the first area in multiple directions, sets the color of the selected model to a color different from the background color, sets colors of models other than the selected model to the same color as the background, and thereby generates second projection images. For example, the generating unit 1304 generates the second projection images of the selected model in the six directions (+X1 to -Z1) of the local coordinate system and the six directions (+Xg to -Zg) of the global coordinate system. The second area acting as a projection area and having the same size as the first area is a bitmap image area of a predetermined size (e.g. 200×200 pixels) illustrated in FIG. 13, for example. When the local coordinate system is identical to the global coordinate system, the generating unit 1304 generates the projection images in the six directions of either coordinate system. This prevents redundant processing from being performed and increases the speed of processing. Similarly, when the local coordinate system is identical to the global coordinate system, the generating unit 1304 generates projection images (A) to (F) as second projection images as illustrated in FIG. 13. In this case, the selected model (e.g. the E-ring 101 in FIG. 13) is projected in a color (white) different from the background color (e.g. black), and other models (e.g. the shaft 102 in FIG. 13) are projected in the background color. Therefore, the bits of the projected locations of the selected model in an interference state are counted.

The calculating unit 1305 compares the first and the second projection images generated by the generating unit 1304 by comparing projected images having the same verification direction that is selected from among multiple directions to calculate a score indicating a matching degree between the projection images for each verification direction. Details will be described with reference to FIG. 13. In this description, the coordinate system illustrated in FIG. 13 is considered as a local coordinate system.

The verification direction selected from among multiple directions is a direction sequentially selected from +X to -Z in the case illustrated in FIG. 13. The calculating unit 1305 compares the projection images having the same verification direction. For example, the calculating unit 1305 compares the projection images (a) and (A) when the verification direction is +X, and the calculating unit 1305 compares the projection images (b) and (B) when the verification direction is -X. For example, the comparison is made as follows.

Below are count results WB1 of the number of white bits representing the image of the E-ring that is the selected model in the projection images (a) to (f) in FIG. 13.

WB1(a) = 2000
WB1(b) = 2000
WB1(c) = 2000
WB1(d) = 2000
WB1(e) = 13000
WB1(f) = 13000

Below are count results WB2 of the number of white bits representing the image of the E-ring that is the selected model in the projection images (A) to (F) in FIG. 13.

WB2(A) = 2000
WB2(B) = 1700
WB2(C) = 2000
WB2(D) = 1700
WB2(E) = 9000
WB2(F) = 9500

Then, the calculating unit 1305 calculates scores in six axis directions (6-axis score) between the results of the same directions. For example, the score in each axis direction is calculated by the following equation (1).

$$\text{Score Bp} = (\text{WB1}/\text{WB2}) \times 100 \qquad (1)$$

Therefore, the scores Bp for the verification directions are as follows.

Bp(+X1) = 100
Bp(-X1) = 85
Bp(+Y1) = 100
Bp(-YI) = 85
Bp(+Z1) = 70
Bp(-ZI) = 73

Since the second projection images represent an interference state with another model and an interference portion is indicated by black bits, the score Bp is a score equal to or less than 100. When the interference state is not generated in the second projection image, the score Bp is the maximum score of 100. Therefore, as the score Bp is higher, the number of matches becomes higher between the projected locations (white bits) of the selected model in the first projection image and the projected locations (white bits) of the selected model in the second projection image. In other words, a higher number of matches means fewer locations of interference with the selected model in the direction opposite to the verification direction. Therefore, the selected model is more likely to be pulled out in the direction opposite to the verification direction. In the example described above, since the score Bp is 100 in both the +X direction and the +Y direction, this indicates that the selected model is likely to be disassembled in the opposite direction, i.e. the -X direction or the -Y direction.

The judging unit 1306 includes a direction judging unit 1361 and an interference judging unit 1362.

The direction judging unit 1361 will be described. The direction judgment is made as a score-increasing process based on the concept that a score is increased when unnecessary rotation and reversal of a model of the assembly destination is avoided since it is preferred that the same assembly direction be continuously used in consideration of "assembly operation". Therefore, the direction judging unit 1361 checks the disassembly direction determined for the previously-selected model from the component information 500 or the assembly information 600 of the previously-selected model. When the disassembly direction is opposite to the verification direction, the calculating unit 1305 adds an additional score AP3 to the score Bp.

The interference judging unit 1362 will be described. The interference judgment is made as a process of improving the determination accuracy of the disassembly direction although occurrence of interference itself is not a direct factor for the possibility of assembly or the possibility of disassembly. The interference judgment is particularly effective when a model shape is a recess shape as in the case of the E-ring 101 frequently used in industrial products or a slide component of a curtain rail. Even when a model having such a shape is seemingly disassembled in an axial direction of a ring, when the model is pulled out in a direction orthogonal to the axis in actual assembling, the determination accuracy of the pull-out direction (disassembly direction) can be improved.

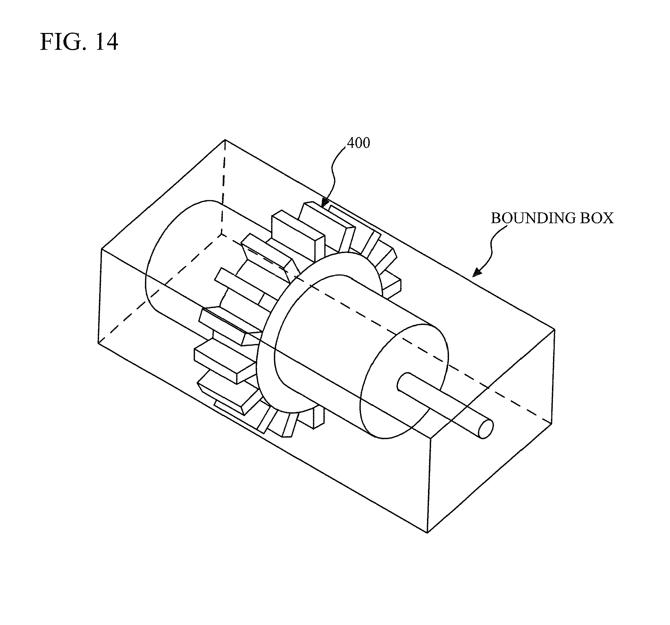

The interference judging unit 1362 moves the selected model in the direction opposite to the verification direction by a predetermined amount not exceeding the length of the verification model in the verification direction to determine whether interference occurs before and after the movement. For example, the interference judging unit 1362 obtains a bounding box of the selected model in the coordinate system of the verification direction. The bounding box is a rectangular parallelepiped circumscribing the selected model in a three-dimensional orthogonal coordinate system. FIG. 14 illustrates a bounding box. The bounding box illustrated in FIG. 14 is a bounding box of the assembly 400 illustrated in FIG. 3. The interference judging unit 1362 calculates parameters (height, width, and depth) from the bounding box. The interference judging unit 1362 moves the selected model in the disassembly direction opposite to the verification direction by [1/4] or [1/2] of the length of the value of the parameter having the same direction as the verification direction among the parameters. The interference judging unit 1362 performs the interference check for the selected model before the movement and the selected model after the movement.

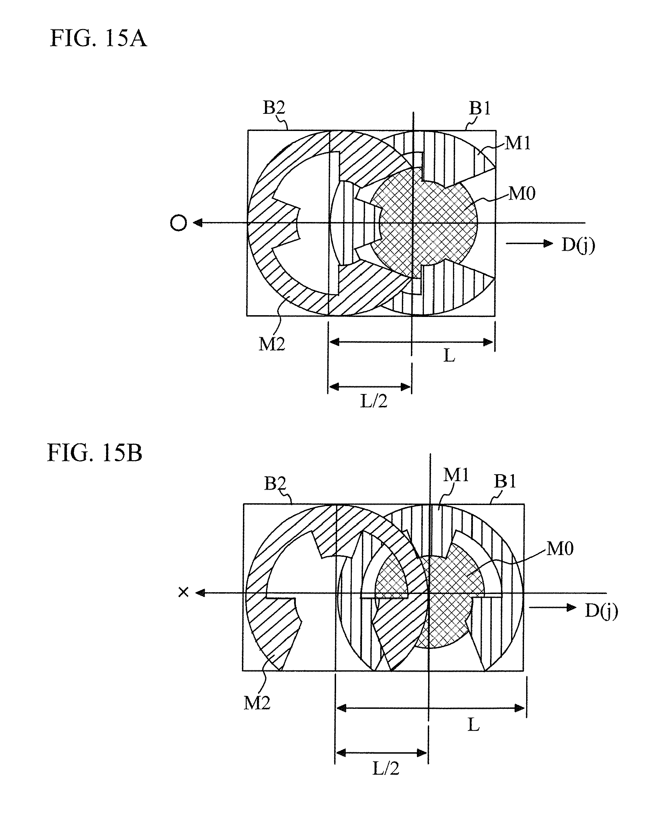

FIG. 15A and FIG. 15B are explanatory diagrams illustrating an interference determination. In FIG. 15A and FIG. 15B, the E-ring 101 is taken as an example of the selected model. FIGs. 15A and 15B illustrate the selected model moved in the direction opposite to the verification direction D(j) by [1/2] of a value L of the parameter having the same direction as the verification direction. In FIGs. 15A and 15B, B1 denotes a bounding box before the movement; B2 denotes a bounding box after the movement; M1 denotes a selected model before the movement; and M2 denotes a selected model after the movement. M0 denotes a model of the assembly destination of the selected model M. In the case illustrated in FIG. 15A, when the selected model M1 is moved in the direction opposite to the verification direction D(j), the model M2 after the movement does not interfere with the model M0 that is the assembly destination. Therefore, an additional score AP4 is added to the score Bp of the verification direction D(j). On the other hand, in the case illustrated in FIG. 15B, when the selected model M1 is moved in the direction opposite to the verification direction D(j), the model M2 after the movement interferes with the model M0 of the assembly destination. Therefore, the additional score AP4 is not added to the score Bp of the verification direction D(j). When the interference judging unit 1362 judges that no interference occurs, the calculating unit 1305 adds the additional score AP4 to the score Bp.

The determining unit 1307 determines a direction opposite to the verification direction of the projection image having the highest score among the scores calculated by the calculating unit 1305 as a disassembly direction for disassembling the selected model from assembly data. The determining unit 1307 stores the determined disassembly direction in the storage unit 1301 in association with the selected model. For example, the determining unit 1307 determines, as the disassembly direction, a direction opposite to the verification direction used for projecting the projection image having the highest score among the scores Bp obtained from 12 directions, i.e. the six directions of the local coordinate system and the six directions of the global coordinate system. The determining unit 1307 also determines, as the assembly direction, the verification direction used for projecting the projection image having the highest score. The determining unit 1307 stores the determined disassembly direction and assembly direction in the top-priority direction field of the component information 500 or the assembly information 600 of the selected model.

The setting unit 1308 includes a viewpoint setting unit 1381 and a movement amount setting unit 1382. The viewpoint setting unit 1381 sets a viewpoint in a viewpoint direction having the gaze point same as the disassembly direction of the selected model and an orientation different from the disassembly direction, and stores the viewpoint in the storage unit 1301 in association with the selected model. Since a model moves in a direction parallel to the depth dimension from a viewpoint in the disassembly direction, an animation becomes difficult to understand. Therefore, the viewpoint setting unit 1381 sets a viewpoint to a coordinate value at a position acquired by tilting each of a zenith angle and an azimuth angle by a predetermined angle (e.g. 30 degrees) and stores the viewpoint in the viewpoint field of the component information 500 or the assembly information 600.

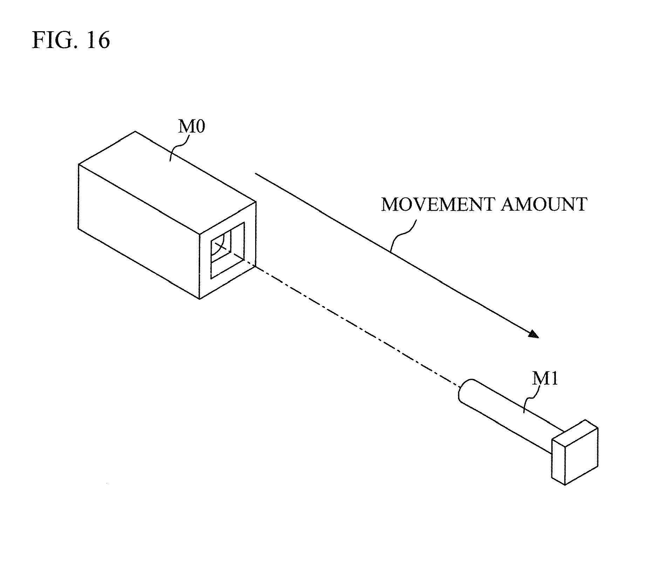

The movement amount setting unit 1382 sets a movement amount of the selected model moved in the disassembly direction based on the length of the selected model in the disassembly direction and stores the movement amount into the storage unit 1301 in association with the selected model. For example, the movement amount setting unit 1382 calculates the parameters (height, width, and depth) of the bounding box of the selected model in the coordinate system of the disassembly direction of the selected model. The movement amount setting unit 1382 multiplies a value of the parameter having the same direction as the disassembly direction of the selected model out of the parameters by a predetermined number (e.g. three) to set the movement amount. FIG. 16 is an explanatory diagram illustrating a setting example of the movement amount. In FIG. 16, M0 is a model of the assembly destination, and M1 is a selected model. In FIG. 16, the length of the selected model M1 in the bounding box in the disassembly direction is assumed to be 200. In this case, for example, the movement amount is set to $200 \times 3 = 600$. Since the selected model is sufficiently separated from the assembly by multiplying the value of the parameter having the same direction as the disassembly direction of the selected model by a predetermined value to set the movement amount, disassembling is easily visible.

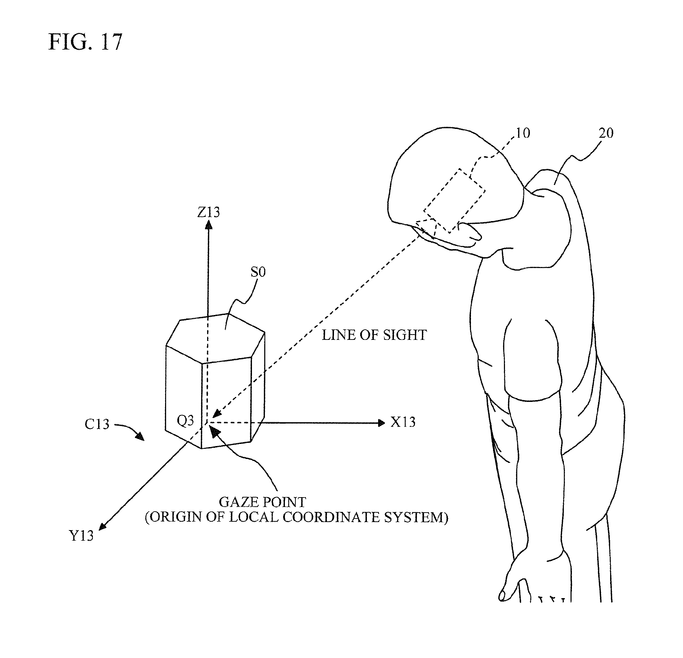

An animation generated by the information generating device 1300 and reproduced by the reproducing unit 1309 will be described before the changing point detecting unit 1310 and the standard time calculating unit 1311 are described. The information generating device 1300 generates two types of animations. A first animation is an animation that shows steps of assembling a product from the viewpoint of a worker who assembles the product (hereinafter, referred to as a first animation). That is to say, the first animation is an animation that shows how the product is observed when the worker actually assembles the product while standing at a working position. FIG. 17 illustrates the component S0 located in the origin position of the local coordinate system C13 (X13, Y13, Z13) and a worker 20 watching the component S0. FIG. 17 assumes that a camera 10 is located at a position of eyes (viewpoint position) of the worker 20. The first animation is an animation of the product seen by the worker 20 whose line of sight is directed from the viewpoint position to the origin of the local coordinate system C13 (X13, Y13, Z13) (gaze point). In the first animation, the viewpoint position is fixed to a predetermined position preliminarily set. The coordinate value of the viewpoint position is stored in the storage unit 1301 as the viewpoint positional information.

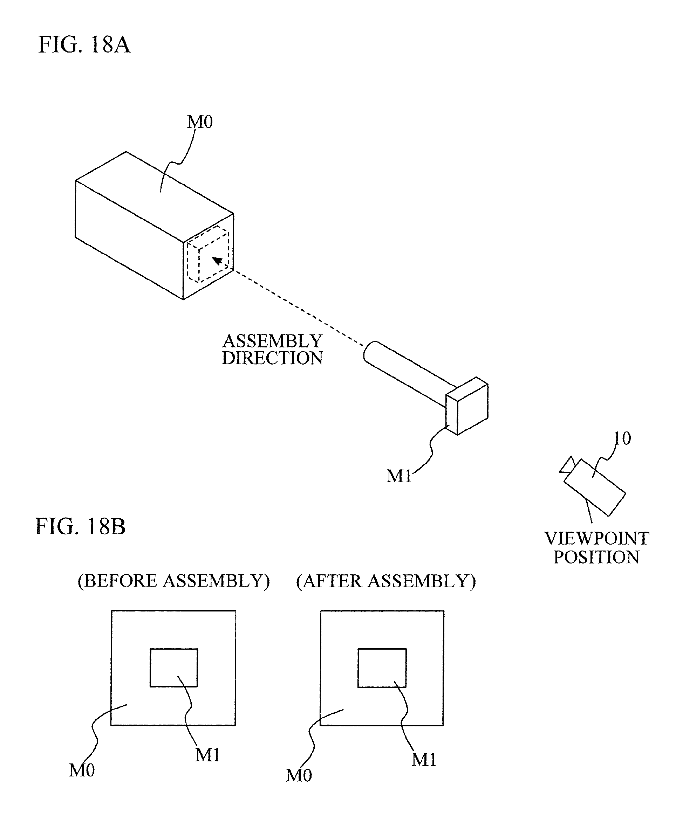

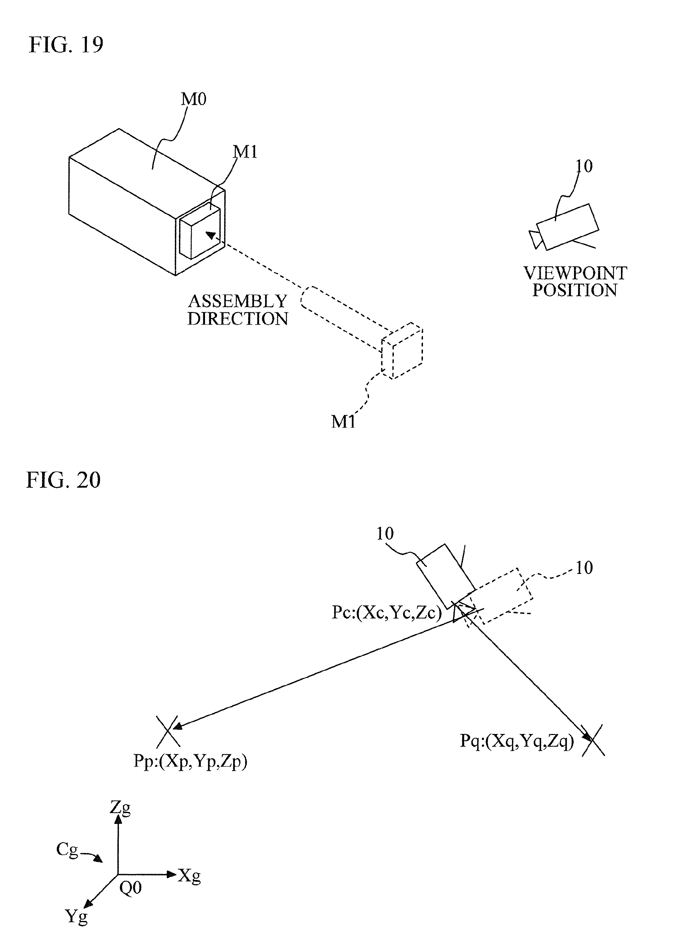

A second animation is an animation used to make the worker understand steps of assembling the product (hereinafter, referred to as a second animation). In the second animation, the viewpoint position is moved to a position from which the assembly of the component is easily understood to make the worker understand the steps of assembling the product. That is to say, the viewpoint setting unit 1381 determines whether the viewpoint position (camera position) needs to be changed for each component to be assembled, and when the change of the viewpoint position is determined to be necessary, the viewpoint position is changed from the viewpoint position used when the previous component is assembled. For example, the animation for assembling the component M1 and the component M0 illustrated in FIG. 18A is assumed to be generated. When the position of the camera 10 illustrated in FIG. 18A is set to the viewpoint position, the shooting direction of the camera 10, i.e. the line of sight, is identical to the movement direction of the component M1. Thus, as illustrated in FIG. 18B, the animation before the assembly is the same as the animation after the assembly. Therefore, when the viewpoint position needs to be changed as illustrated in FIG. 19, the viewpoint position (camera position) is changed, and the viewpoint coordinate value of the viewpoint position from which the worker understands assembly of the component is stored as the component information 500 and the assembly information 600. When the animation is reproduced, the animation enables the worker to easily understand the assembly method.

The worker 20 may change the posture or the standing position of the worker 20 in an actual operation when the viewpoint position of the animation changes since the worker 20 assembles the product while referring to the first and the second animations. When the posture or the standing position of the worker 20 change, the actual operation time may be delayed, and the actual operation time may differ from an operation time calculated by a simulation.

FIG. 20 illustrates a component Pp (Xp, Yp, Zp) and a component Pq (Xq, Yq, Zq) located in a space in the global coordinate system Cg and a viewpoint position Pc (Xc, Yc, Zc) of a worker. In FIG. 20, the camera 10 is arranged in the viewpoint position Pc. For example, the component Pp and the component Pq are assumed to be mounted to an assembly not illustrated. According to the first or the second animation, the worker is assumed to first mount the component Pp to the assembly (not illustrated) at a position (Xp, Yp, Zp) far from a working position of the worker, and then mount the component Pq at a position (Xq, Yq, Zq) near the working position. In this case, as illustrated in FIG. 20, the direction of the line of sight greatly changes and thus the standing position or the posture of the worker greatly changes. Therefore, the actual operation time may differ from an estimate of the product assembly time calculated by the simulation (hereinafter, referred to as a standard time).

To reduce the difference between the standard time calculated by the simulation and the actual operation time, the changing point detecting unit 1310 detects the change of the viewpoint in the first and the second animations in the present embodiment. The standard time calculating unit 1311 calculates the estimate of the product assembly time based on the change in the viewpoints of the first and the second animations detected by the changing point detecting unit 1310.

The changing point detecting unit 1310 detects change in the position of the product in the first animation to detect change in the viewpoint of the first animation. For example, the changing point detecting unit 1310 detects the change in the position of the product from the worker visual range and the worker sight line angle. In addition, the changing point detecting unit 1310 detects change in the viewpoint position or change in the position of the product in the second animation to detect change in the viewpoint of the second animation. For example, the changing point detecting unit 1310 detects the change in the viewpoint position or the change in the position of the product from the zenith angle, the azimuth angle, the viewpoint angle, and the operation order gazing point distance. These processes will be described in detail.

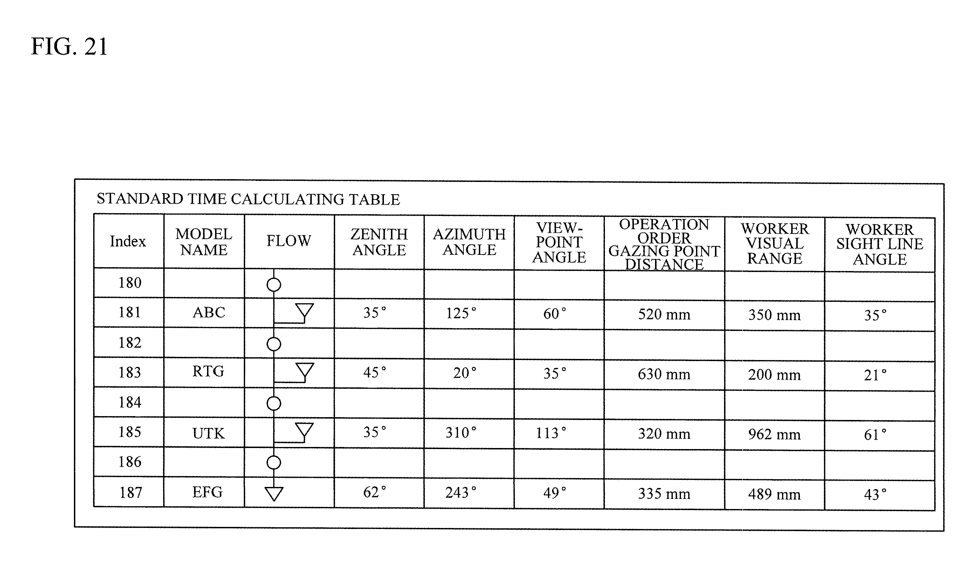

As described above, the component information 500 and the assembly information 600 include a relative coordinate value field and a viewpoint field. In addition, the storage unit 1301 stores the coordinate value of the viewpoint position of the first animation as viewpoint positional information. The changing point detecting unit 1310 refers to these values and calculates the zenith angle, the azimuth angle, the viewpoint angle, the operation order gazing point distance, the worker visual range, and the worker sight line angle for each model in the manufacturing flow. The changing point detecting unit 1310 stores the worker visual range, the worker sight line angle, the zenith angle, the azimuth angle, the viewpoint angle, and the operation order gazing point distance calculated by the changing point detecting unit 1310 in a standard time calculating table illustrated in FIG. 21. The standard time calculating table includes recording fields that store the zenith angle, the azimuth angle, the viewpoint angle, the operation order gazing point distance, the worker visual range, and the worker sight line angle in association with each node of the manufacturing flow representing the model. The standard time calculating table is stored in the storage unit 1301. Hereinafter, the worker visual range and the worker sight line angle are referred to as first animation information. In addition, the zenith angle, the azimuth angle, the viewpoint angle, and the operation order gazing point distance are referred to as second animation information.

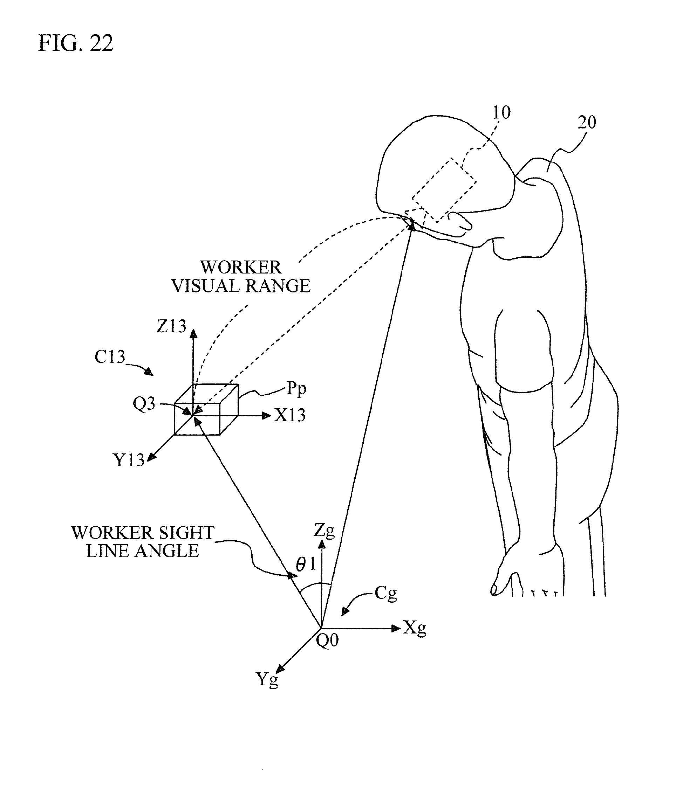

With reference to FIG. 22, a description will be given of the worker visual range and the worker sight line angle of the first animation information. FIG. 22 illustrates the local coordinate system (C13) in which the component Pp is located, the global coordinate system Cg, and the worker 20. The worker visual range indicates a distance between the origin Q3 of the local coordinate system C13 in which the component Pp is located and the viewpoint position of the worker. In the case of the first animation, the viewpoint position of the worker does not change. When the origin Q3 of the local coordinate system C13 of the component Pp moves, the worker visual range also changes. The worker sight line angle is an angle $\theta1$ between a vector connecting the origin Q0 of the global coordinate system Cg and the origin Q3 of the local coordinate system C13 of the component Pp and a vector connecting the origin Q0 of the global coordinate system Cg and the viewpoint position of the worker. The worker sight line angle $\theta1$ also changes when the origin position of the local coordinate system of the component changes.

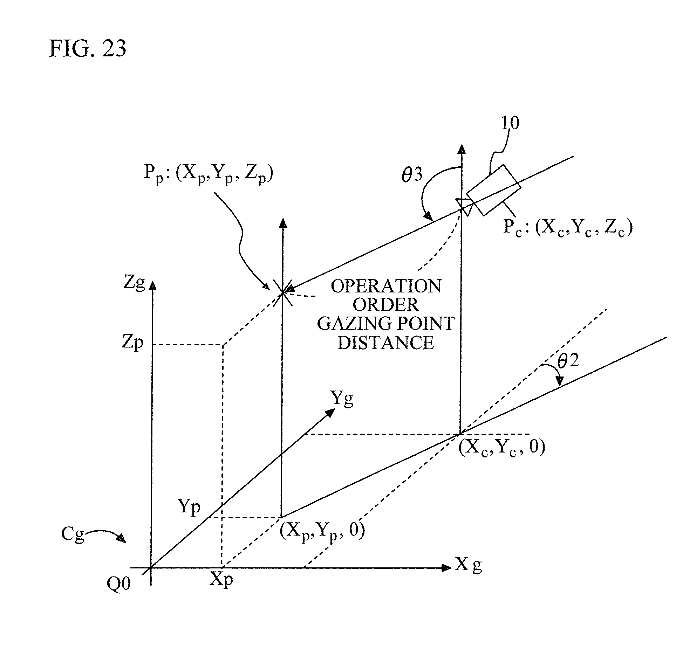

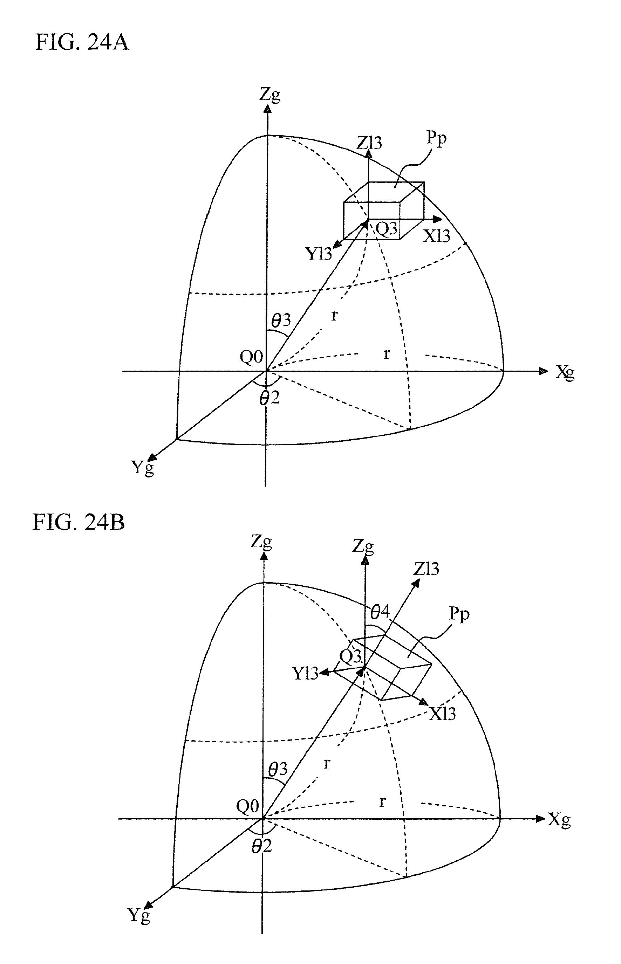

A description will next be given of the azimuth angle, the zenith angle, and the operation order gazing point distance with reference to FIG. 23. FIG. 23 illustrates the global coordinate system Cg, the component Pp (Xp, Yp, Zp) located in the space on the global coordinate system Cg, and the viewpoint position Pc (Xc, Yc, Zc). The azimuth angle $\theta2$ indicates an angle between a vector connecting the component Pp (Xp, Yp, Zp) and the viewpoint position Pc (Xc, Yc, Zc) and the Y axis (Yg) of the global coordinate system Cg. That is to say, the azimuth angle $\theta2$ is an angle of rotation around the Z axis (Zg) from the Y axis of the global coordinate system Cg and is set in a range between 0.0° and 359.9° in accordance with the component Pp. In addition, the zenith angle $\theta3$ indicates an angle between a vector connecting the component Pp (Xp, Yp, Zp) and the viewpoint position Pc (Xc, Yc, Zc) and the Z axis (Zg) of the global coordinate system Cg. That is to say, the zenith angle θ3 is an angle tilting to the XgYg plane of the global coordinate system Cg from the Z axis (Zg) of the global coordinate system Cg (e.g. see θ3 in FIG. 24A), and is set in a range between 0.0° and 180.0° in accordance with the position of the component Pp. In addition, the operation order gazing point distance indicates a distance of a vector connecting the component Pp (Xp, Yp, Zp) and the viewpoint position Pc (Xc, Yc, Zc).

A description will next be given of a viewpoint angle with reference to FIG. 24A and FIG. 24B. FIG. 24A illustrates the component Pp located in the origin Q3 of the local coordinate system (C13) of the component Pp. The position of the origin Q3 of the local coordinate system (C13) of the component Pp is determined based on a distance r from the origin Q0 of the global coordinate system Cg to the origin Q3 of the local coordinate system (C13), the azimuth angle θ2, and the zenith angle θ3. The state illustrated in FIG. 24A is referred to as an initial state. FIG. 24B illustrates a viewpoint angle adjusted from the initial state illustrated in FIG. 24A. The viewpoint angle is an angle with which the coordinate axis of the local coordinate system (C13) is rotated so that the worker easily confirms the operation for assembling the component Pp. In FIG. 24B, the Z axis (Z13) of the local coordinate system (C13) of the component Pp is rotated with respect to the Z axis (Zg) of the global coordinate system Cg by θ4. The rotated angle θ4 is a viewpoint angle. The viewpoint angle θ4 is an angle of the Z axis of the local coordinate system after the rotation to the Z axis (Zg) of the global coordinate system Cg, and is set in a range between 0.0° and 359.9°. The viewpoint angle set for the component or the assembly is stored in the storage unit 1301 as the component information 500 or the assembly information 600.

A description will next be given of an example of a method of calculating a standard time. The changing point detecting unit 1310 refers to the viewpoint positional information, the relative coordinate values, and the viewpoint angle that are stored as the component information 500 and the assembly information 600. In addition, the changing point detecting unit 1310 refers to the viewpoint positional information of the first animation stored in the storage unit 1301. The changing point detecting unit 1310 refers to these information to calculate the zenith angle, the azimuth angle, the viewpoint angle, the operation order gazing point distance, the worker visual range, and the worker sight line angle for each model of the manufacturing flow. These values can be calculated from the origin position of the global coordinate system Cg, the relative coordinate values (the origin position of the local coordinate system), and the viewpoint position as described with reference to FIG. 22 to FIG. 24B. The viewpoint angle stored in the storage unit 1301 in advance is used. The changing point detecting unit 1310 stores the calculated values in recording fields of the zenith angle, the azimuth angle, the viewpoint angle, the operation order gazing point distance, the worker visual range, and the worker sight line angle of the node representing the selected model.

The changing point detecting unit 1310 then refers to the standard time calculating table and determines whether there is a change in the first animation information and the second animation information. The changing point detecting unit 1310 selects a node to be processed. The changing point detecting unit 1310 selects a node that is a node in the next higher hierarchy of the lowest hierarchy and represents the model. For example, in the manufacturing flow illustrated in FIG. 7B, the node representing a model in the lowest hierarchy is A0, and thus A1 that is a node in the next higher hierarchy thereof is selected. The reason why the node is selected from the lower hierarchy is because the ascending order of the node numbers is the assembly order. In addition, the node in the lowest hierarchy is an animation that shows the first assembly scene, and thus there is no change in the viewpoint position. Therefore, the node in the lowest hierarchy is excluded from the node to be processed. After selecting the node to be processed, the changing point detecting unit 1310 extracts the worker visual range of the selected node to be processed from the standard time calculating table. In addition, the changing point detecting unit 1310 takes the worker visual range of the node representing a node in the next lower hierarchy of the node to be processed in the manufacturing flow from the standard time calculating table. In the case of the manufacturing flow illustrated in FIG. 7B, when the node to be processed is A1, the changing point detecting unit 1310 takes the worker visual range stored in the node of A0 that is in the next lower hierarchy of A1 from the standard time calculating table. The changing point detecting unit 1310 then calculates the difference between the worker visual range of the node to be processed and the worker visual range of the node in the next lower hierarchy of the node to be processed to determine whether there is a change in the worker visual range. When detecting the difference in the worker visual range, the changing point detecting unit 1310 stores the calculated difference in the storage unit 1301. The changing point detecting unit 1310 repeats this process till the node in the highest hierarchy is processed. In addition, the changing point detecting unit 1310 also calculates the differences between the nodes in the worker sight line angle, the zenith angle, the azimuth angle, the viewpoint angle, the operation order gazing point distance, and the worker visual range.

A description will next be given of a process by the standard time calculating unit 1311. The standard time calculating unit 1311 calculates the sum of differences calculated by the changing point detecting unit 1310 for each field. The standard time calculating unit 1311 calculates the sum of differences for each of the zenith angle field, the azimuth angle field, the viewpoint angle field, the operation order gazing point distance field, the worker visual range field, and the worker sight line angle field. In addition, the standard time calculating unit 1311 multiplies the sum of the differences of each field by the corresponding predetermined coefficient to calculate an estimate of error in time calculated

**EP 2 782 052 A1**

from the sum of the differences (cumulative value) for each field. That is to say, the cumulative value of the changing amount of the worker visual range or the worker sight line angle is calculated in the first animation by calculating the sum of the differences for each field. In addition, calculated is the cumulative value of the changing amount of each of the zenith angle, the azimuth angle, the viewpoint angle, and the operation order gazing point distance in the second animation. The estimate of delay time of the operation caused by the change in the worker visual range or the worker sight line angle is calculated by multiplying the calculated cumulative value of the changing amount by a predetermined coefficient. Similarly, the estimate of delay time of the operation caused by the change in the zenith angle, the azimuth angle, the viewpoint angle, or the operation order gazing point distance is calculated by multiplying the calculated cumulative value of the changing amount by a predetermined coefficient.

The standard time calculating unit 1311 multiplies the sum of differences in the worker visual range by a coefficient A1 to calculate the estimate of error in time caused by change in the worker visual range (hereinafter, referred to as a worker visual range error time). The standard time calculating unit 1311 also multiplies the sum of differences in the worker sight line angle by a coefficient A2 to calculate the estimate of error in time caused by change in the worker sight line angle (hereinafter, referred to as a worker sight line angle error time). In addition, the standard time calculating unit 1311 multiplies the sum of differences in the zenith angle by a coefficient A3 to calculate the estimate of error in time caused by change in the zenith angle (hereinafter, referred to as a zenith angle error time). The standard time calculating unit 1311 multiplies the sum of differences in the azimuth angle by a coefficient A4 to calculate the estimate of error in time caused by change in the azimuth angle (hereinafter, referred to as an azimuth angle error time). The standard time calculating unit 1311 multiplies the sum of differences in the viewpoint angle by a coefficient A5 to calculate the estimate of error in time caused by change in the viewpoint angle (hereinafter, referred to as a viewpoint angle error time). The standard time calculating unit 1311 multiplies the sum of differences in the operation order gazing point distance by a coefficient A6 to calculate the estimate of error in time caused by change in the operation order gazing point distance (hereinafter, referred to as an operation order gazing point distance error time).

Furthermore, the standard time calculating unit 1311 adds the calculated worker visual range error time to the calculated worker sight line angle error time to obtain the estimate of error in time in the first animation. Similarly, the standard time calculating unit 1311 adds up the zenith angle error time, the azimuth angle error time, the viewpoint angle error time, and the operation order gazing point distance error time to obtain the estimate of error in time in the second animation. As described above, the worker 20 assembles the product while referring to the first and the second animations. Thus, the worker may be affected by the change in the worker visual range or the worker sight line angle in the first animation and the change in the zenith angle, the azimuth angle, the viewpoint angle, or the operation order gazing point distance in the second animation. The standing position and the posture of the worker may cause the delay of the operation time. Thus, the standard time calculating unit 1311 calculates the standard time that is an operation time in the simulation by using the calculated estimates of the error in time in the first animation and the error in time in the second animation.

The output unit 1312 acquires the standard time calculated by the standard time calculating unit 1311 from the storage unit 1301, and outputs the acquired standard time to the display 1208 to display it or outputs it to the printer 1213 to print it out from the printer 1213.

<Information generating process>

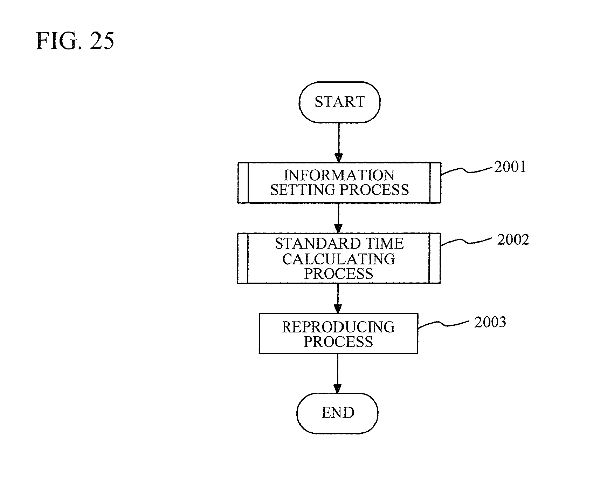

FIG. 25 is a flowchart illustrating a detailed procedure of the information generating process executed by the information generating device 1300. The information generating device 1300 executes an information setting process (step S2001), a standard time calculating process (step S2002), and a reproducing process (step S2002). The information generating device 1300 searches a disassembly pathway to disassemble a product including multiple components into the components by a simulation, and generates an assembly pathway of the components making up the product by tracking back the disassemble pathway. In the information setting process, disassembly and assembly directions, a viewpoint, and a movement amount are set for each selected model. In the standard time calculating process, calculated is the standard time in consideration of the worker visual range, the worker sight line angle, the zenith angle, the azimuth angle, the viewpoint angle, and the operation order gazing point distance by the simulation. The calculated standard time may be displayed on the display 1208, or printed out from the printer 1213. In the reproducing process, at least one of the first animation and the second animation is reproduced by using the information set in the information setting process.

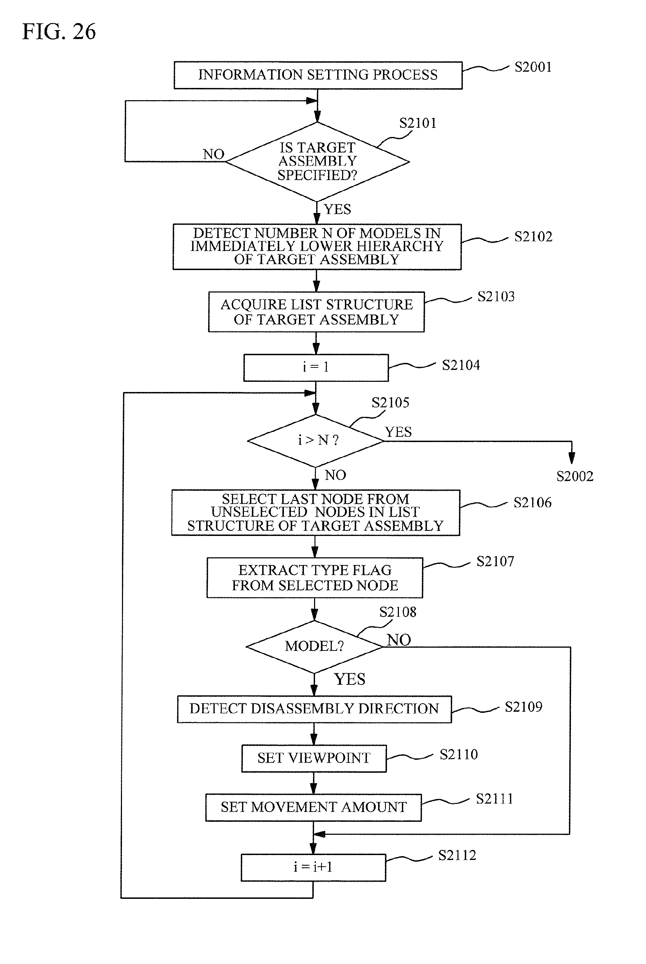

FIG. 26 is a flowchart illustrating a detailed process procedure of the information setting process (step S2101) illustrated in FIG. 25. First, the information generating device 1300 waits until a target assembly is specified (step S2101/NO). For example, the information generating device 1300 waits until a target assembly is specified from a manufacturing flow via user operation.

When a target assembly is specified (step S2101/YES), the information generating device 1300 detects the number N of models in the immediately lower hierarchy of the target assembly (step S2102). For example, the information

**12**

generating device 1300 extracts a value stored in the immediately lower constituent model count field of the assembly information 600 of the target assembly. This value is identical to the number of models in a separated manufacturing flow for the target assembly.

The information generating device 1300 then identifies the separated manufacturing flow of the target assembly from the separated manufacturing flows stored in a storage device such as the magnetic disk 1205 or the optical disk 1207. The information generating device 1300 acquires the identified list structure (step S2103). For example, when the target assembly is A0, the information generating device 1300 acquires the list structure 1101 (FIG. 10) corresponding to the separated manufacturing flow 901 illustrated in FIG. 8. The information generating device 1300 sets an index i of a counter to i = 1 (step S2104) and determines whether i > N is satisfied (step S2105). In other words, it is determined whether the information generating device 1300 has selected all the models in the acquired list structure.

When i > N is not satisfied (step S2105/NO), the information generating device 1300 selects the last node among unselected nodes in the list structure of the target assembly (step S2106). Although nodes may be selected in an arbitrary order, the models can be selected sequentially from the last assembled model in the manufacturing flow by starting the selection from the last node. The information generating device 1300 extracts a type flag from the selected node (step S2107) to determine whether the selected node is a model (step S2108). When the type flag is "0" or "1", the selected node is a model and, in the case of "2", which denotes a process, the selected node is not a model.

When it is determined that the selected node is not a model (step S2108/NO), the procedure transitions to step S2112. In contrast, when it is determined that the selected node is a model (step S2108/YES), the information generating device 1300 detects a disassembly direction (step S2109). The detection of the disassembly direction is a process of detecting the disassembly direction of the selected node that has been determined as a model, i.e. the selected model. The detection of the disassembly direction is executed by the selecting unit 1303, the generating unit 1304, the calculating unit 1305, the judging unit 1306, and the determining unit 1307 illustrated in FIG. 12. When the disassembly direction is detected, the information generating device 1300 sets a viewpoint (S2110). The setting of the viewpoint is a process of setting the viewpoint of the selected model, and is set in the viewpoint setting unit 1381 illustrated in FIG. 12. After the setting of the viewpoint, the information generating device 1300 sets a movement amount (step S2111). The setting of the movement amount is a process of setting the movement amount of the selected model, and is set in the movement amount setting unit 1382 illustrated in FIG. 12.

At step S2112, the information generating device 1300 increments the index i of the counter (step S2112) and returns to step S2105. When it is determined at step S2105 that i > N is satisfied (step S2105/YES), the information generating device 1300 transitions to the standard time calculating process illustrated in FIG. 25.

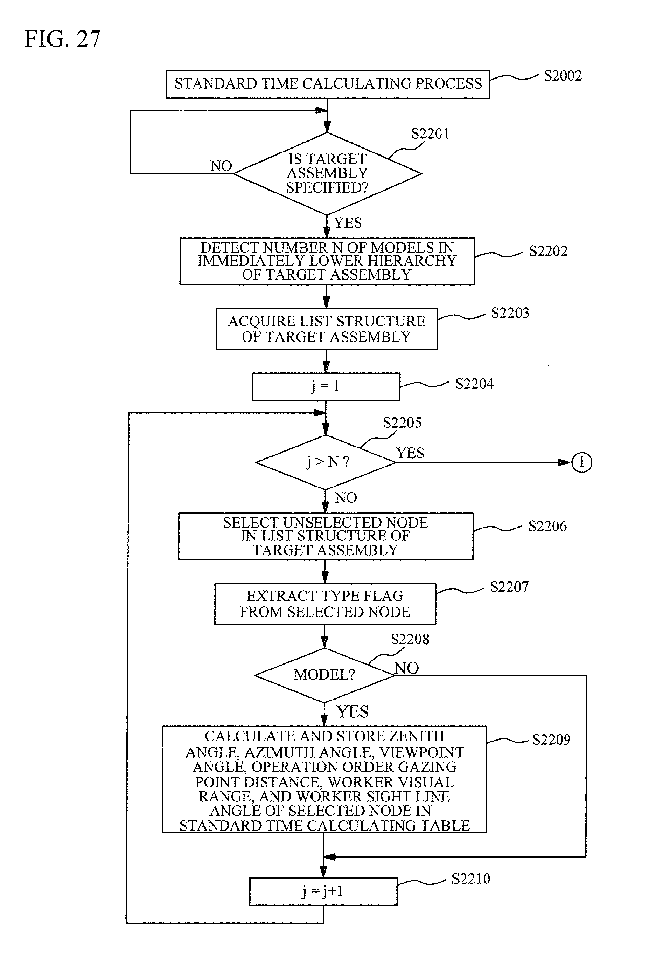

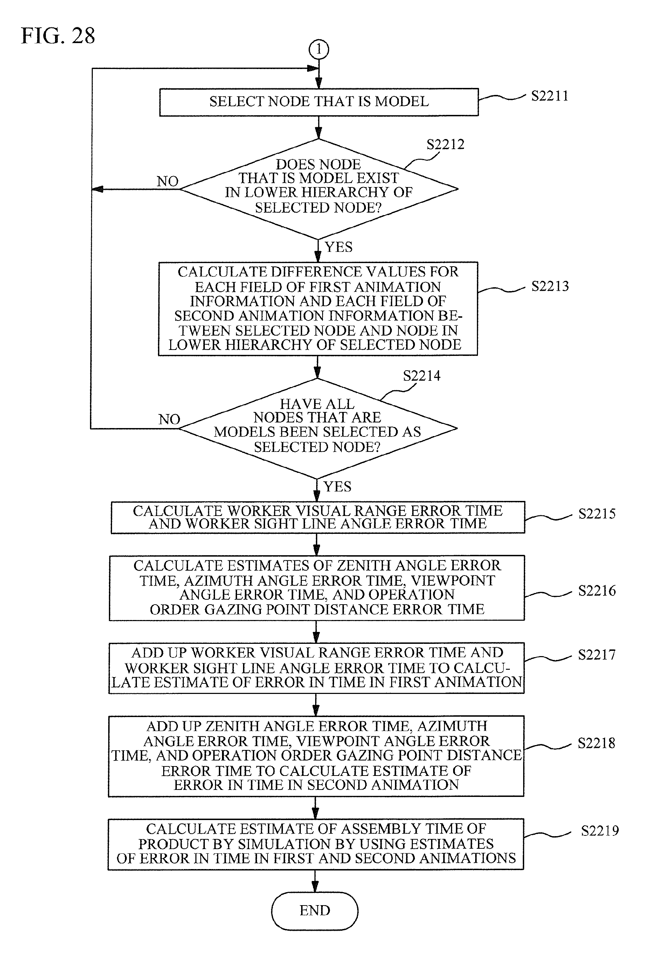

A description will next be given of a detail of the standard time calculating process with reference to FIG. 27 and FIG. 28. The steps from the start till the type flag is extracted from the selected node at step S2207 are the same as those of the flow in FIG. 26, and will not be described. The information generating device 1300 extracts the type flag from the selected node (step S2207) and determines whether the selected node is a model (step S2208). When it is determined that the selected node is not a model (step S2208/NO), the procedure moves to step S2210. When the selected node is a model (step S2208/YES), the information generating device 1300 acquires the viewpoint positional information, the relative coordinate value, and the viewpoint angle stored as the component information 500 or the assembly information 600 of the selected node. In addition, the information generating device 1300 acquires the viewpoint positional information in the first animation from the storage unit 1301. The information generating device 1300 then refers to the viewpoint positional information, the relative coordinate value, and the viewpoint angle to calculate the zenith angle, the azimuth angle, the viewpoint angle, the operation order gazing point distance, the worker visual range, and the worker sight line angle (step S2209). The viewpoint angle acquired from the storage unit 1301 is used without change. The information generating device 1300 stores information about the calculated angle and the calculated distance in the standard time calculating table illustrated in FIG. 21 (step S2209). The information generating device 1300 stores the information about the calculated angle and the calculated distance in the recording fields of the node corresponding to the component information 500 or the assembly information 600 from which the viewpoint positional information and the relative coordinate value are acquired. The information generating device 1300 then increments an index j of a counter (step S2210), and moves to step S2205. At step S2205, when the index j of the counter is greater than N, the information generating device 1300 moves to the flow illustrated in FIG. 28. When the index j of the counter is N or less, the information generating device 1300 repeats the procedures of steps S2206 to S2210.

A description will next be given of a process flow when the determination at step S2205 is YES with reference to a flowchart illustrated in FIG. 28. When the determination at step S2205 is YES, the information generating device 1300 refers to the standard time calculating table illustrated in FIG. 21 to select a node that is a model (step S2211). A flow symbol indicated by a triangle in the manufacturing flow illustrated in FIG. 21 represents a node that is a model. After selecting a node that is a model, the information generating device 1300 determines whether another node that is a model exists in a lower hierarchy of the selected node that is a model (step S2212). Since the ascending order of the node number illustrated in FIG. 9 is an assembly order, the information generating device 1300 determines whether another node that is a model exists in a lower hierarchy of the selected node that is a model. When determining that a node in a lower hierarchy of the selected node exists (step S2212/YES), the information generating device 1300 refers to the standard time calculating table to calculate the difference value between the selected node and a node in a lower hierarchy of the selected node (step S2213). The difference value is calculated with respect to the zenith angle field, the azimuth angle field, the viewpoint angle field, the operation order gazing point distance field, the worker visual range field, and the worker sight line angle field stored in the standard time calculating table. The information generating device 1300 stores the difference values calculated for respective field in the storage unit 1301. The information generating device 1300 then determines whether all nodes that are a model have been selected as the selected node (step S2214). When all nodes that are models have been selected as the selected node, the information generating device 1300 moves to the process of the step S2215. When all nodes that are models have not been selected as the selected node, the information generating device 1300 repeats the process from steps S2211 to S2214.

When the determination at step S2214 is YES, the information generating device 1300 multiplies the calculated difference values by respective coefficients to calculate the estimates of the worker visual range error time and the worker sight line angle error time (step S2215). The information generating device 1300 multiplies the sum of difference values of the worker visual range by the coefficient A1 to calculate the worker visual range error time. The information generating device 1300 also multiplies the sum of difference values of the worker sight line angle by the coefficient A2 to calculate the worker visual range error time (step S2215). In addition, the information generating device 1300 multiplies each of the calculated difference values by the corresponding coefficient to calculate the estimates of the zenith angle error time, the azimuth angle error time, the viewpoint angle error time, and the operation order gazing point distance error time (step S2216). The information generating device 1300 multiplies the sum of difference values of the zenith angle by the coefficient A3 to calculate the zenith angle error time (step S2216). The information generating device 1300 multiplies the sum of difference values of the azimuth angle by the coefficient A4 to calculate the azimuth angle error time (step S2216). In addition, the information generating device 1300 multiplies the sum of difference values of the viewpoint angle by the coefficient A5 to calculate the viewpoint angle error time (step S2216). The information generating device 1300 multiplies the sum of difference values of the operation order gazing point distance by the coefficient A6 to calculate the operation order gazing point distance error time (step S2216).

The information generating device 1300 then adds up the worker visual range error time and the worker sight line angle error time calculated at step S2215 to calculate the estimate of error in time of the first animation information (step S2217). In addition, the information generating device 1300 adds up the zenith angle error time, the azimuth angle error time, the viewpoint angle error time, and the operation order gazing point distance error time to calculate the estimate of error in time of the second animation information (step S2218).

The information generating device 1300 calculates the estimate of the assembly time of the product calculated by the simulation by using the calculated estimate of error in time of the first animation information and the calculated estimate of error in time of the second animation information (step S2219).

As described in detail, the present embodiment detects change in the viewpoint position from which the product is viewed or change in the position of the product in the animation referred to by the worker during the operation to calculate the estimate of the assembly time of the product. Therefore, the accuracy in estimating the assembly time calculated in the simulation can be improved.

**Claims**

1. A program causing a computer to execute a process, the process comprising:

   acquiring animation data for displaying steps of assembling a product on a display with an animation;
   detecting change in a viewpoint of an animation from the acquired animation data (S2213); and
   calculating an estimate of an assembly time of the product based on the detected change in the viewpoint of the animation (S2219).

2. The program according to claim 1, wherein
   the calculating of the estimate (S2219) includes detecting at least one of change in a viewpoint position from which the product is viewed or a position of the product in an animation that shows the steps of assembling the product while changing the viewpoint position and change in the position of the product in an animation that shows the steps of assembling the product from a viewpoint position of a worker who assembles the product to calculate the estimate.

3. A method of calculating an assembly time that calculates a product assembly time by a simulation, the method comprising:

   acquiring animation data for displaying steps of assembling a product on a display with an animation;

detecting change in a viewpoint of an animation from the acquired animation data (S2213); and
calculating an estimate of an assembly time of the product based on the detected change in the viewpoint of the animation (S2219).

4. The method according to claim 3, wherein
the calculating of the estimate (S2213) includes detecting at least one of change in a viewpoint position from which the product is viewed or a position of the product in an animation that shows the steps of assembling the product while changing the viewpoint position and change in the position of the product in an animation that shows the steps of assembling the product from a viewpoint position of a worker who assembles the product to calculate the estimate.

5. An assembly time calculating device that calculates an assembly time of a product by a simulation, the assembly time calculating device comprising:

an acquiring unit (1302) configured to acquire animation data for displaying steps of assembling the product on a display with an animation;
a detecting unit (1310) configured to detect change in a viewpoint of an animation from the acquired animation data; and
a calculating unit (1311) configured to calculate an estimate of the assembly time of the product based on the detected change in the viewpoint of the animation.

6. The assembly time calculating device according to claim 5, wherein
the calculating unit (1311) detects at least one of change in a viewpoint position from which the product is viewed or a position of the product in an animation that shows the steps of assembling the product while changing the viewpoint position and change in the position of the product in an animation that shows the steps of assembling the product from a viewpoint position of a worker who assembles the product to calculate the estimate.

FIG. 1

FIG. 2

TOP ASSEMBLY A0

202

ASSEMBLY A1

ASSEMBLY A2

COMPONENT p1

COMPONENT p2

ASSEMBLY A3

ASSEMBLY A4

COMPONENT p5

COMPONENT p3

COMPONENT p6

ASSEMBLY A5

COMPONENT p4

ASSEMBLY A6

COMPONENT p7

COMPONENT p8

COMPONENT p9

COMPONENT p10

FIG. 3

## FIG. 4

EP 2 782 052 A1

500

| COMPONENT INFORMATION | | | | | | | | | | | | |
|---|---|---|---|---|---|---|---|---|---|---|---|---|
| IDENTIFICATION INFORMATION | pi | | | | | | | | | | | |
| SHAPE INFORMATION | FACET | | | | | | FACET NORMAL VECTOR | | | | | |
| | fi-1~fi-ni | | | | | | vi-1~vi-ni | | | | | |
| RELATIVE COOR-DINATE VALUE | Ci | | | | | | | | | | | |
| RELATIVE ORIENTATION | Ri | | | | | | | | | | | |
| TOP-PRIORITY DIRECTION | ASSEMBLY DIRECTION | | | | | | DISASSEMBLY DIRECTION | | | | | |
| | | | | | | | | | | | | |
| 6-AXIS SCORE | LOCAL | | | | | | GLOBAL | | | | | |
| | +Xl | -Xl | +Yl | -Yl | +Zl | -Zl | +Xg | -Xg | +Yg | -Yg | +Zg | -Zg |
| | | | | | | | | | | | | |
| VIEWPOINT | | | | | | | | | | | | |
| MOVEMENT AMOUNT | | | | | | | | | | | | |

# FIG. 5

| | ASSEMBLY INFORMATION | | | | | | | | | | | |
|---|---|---|---|---|---|---|---|---|---|---|---|---|
| IDENTIFICATION INFORMATION | Ai | | | | | | | | | | | |
| IMMEDIATELY LOWER CONSTITUENT MODEL COUNT | mi | | | | | | | | | | | |
| PARENT ASSEMBLY IDENTIFICATION INFORMATION | Aj | | | | | | | | | | | |
| RELATIVE COOR-DINATE VALUE | Ci | | | | | | | | | | | |
| RELATIVE ORIENTATION | Ri | | | | | | | | | | | |
| TOP-PRIORITY DIRECTION | ASSEMBLY DIRECTION | | | | | | DISASSEMBLY DIRECTION | | | | | |
| | | | | | | | | | | | | |
| 6-AXIS SCORE | LOCAL | | | | | | GLOBAL | | | | | |
| | +Xl | -Xl | +Yl | -Yl | +Zl | -Zl | +Xg | -Xg | +Yg | -Yg | +Zg | -Zg |
| | | | | | | | | | | | | |
| VIEWPOINT | | | | | | | | | | | | |
| MOVEMENT AMOUNT | | | | | | | | | | | | |

600

FIG. 6

FIG. 7A

FIG. 7B

801

802

▽ ASSEMBLY
▽ COMPONENT
○ PROCESS

FIG. 8

FIG. 9

| NODE NUMBER | NODE INFORMATION | POINTER TO NEXT NODE |
|---|---|---|

| MODEL IDENTIFICATION INFORMATION | TYPE FLAG | FLOW SYMBOL | PROCESS INFORMATION |
|---|---|---|---|

FIG. 10

N1 | 1 | A0 | 1 | ▼ | — | 2 |

1101

N2 | 2 | A1 | 1 | ▼ | — | 3 |

N3 | 3 | F1 | 2 | ○ | DRILL-ING | 4 |

N4 | 4 | A5 | 1 | ▼ | — | 5 |

N5 | 5 | p10 | 0 | ▼ | — | Null |

FIG. 11

FIG. 12

EP 2 782 052 A1

FIG. 13

FIG. 14

400

BOUNDING BOX

FIG. 15A

FIG. 15B

FIG. 16

M0

MOVEMENT AMOUNT

M1

FIG. 17

Z13

S0

LINE OF SIGHT

C13

Q3

X13

GAZE POINT
(ORIGIN OF LOCAL COORDINATE SYSTEM)

Y13

10

20

FIG. 18A

M0

ASSEMBLY
DIRECTION

M1

10

VIEWPOINT
POSITION

FIG. 18B

(BEFORE ASSEMBLY)        (AFTER ASSEMBLY)

M0                                   M0

M1                                   M1

FIG. 19

M0

M1

ASSEMBLY
DIRECTION

M1

10

VIEWPOINT
POSITION

FIG. 20

10

10

$Pc:(Xc,Yc,Zc)$

$Pp:(Xp,Yp,Zp)$

$Pq:(Xq,Yq,Zq)$

Zg

Cg

Xg

Q0

Yg

FIG. 21

STANDARD TIME CALCULATING TABLE

| Index | MODEL NAME | FLOW | ZENITH ANGLE | AZIMUTH ANGLE | VIEW-POINT ANGLE | OPERATION ORDER GAZING POINT DISTANCE | WORKER VISUAL RANGE | WORKER SIGHT LINE ANGLE |
|---|---|---|---|---|---|---|---|---|
| 180 | | | | | | | | |
| 181 | ABC | | 35° | 125° | 60° | 520 mm | 350 mm | 35° |
| 182 | | | | | | | | |
| 183 | RTG | | 45° | 20° | 35° | 630 mm | 200 mm | 21° |
| 184 | | | | | | | | |
| 185 | UTK | | 35° | 310° | 113° | 320 mm | 962 mm | 61° |
| 186 | | | | | | | | |
| 187 | EFG | | 62° | 243° | 49° | 335 mm | 489 mm | 43° |

EP 2 782 052 A1

FIG. 22

WORKER
VISUAL RANGE

Z13

C13

Q3

Pp

X13

Y13

WORKER SIGHT
LINE ANGLE

Zg

$\theta 1$

Cg

Xg

Q0

Yg

10

20

FIG. 23

$P_p : (X_p, Y_p, Z_p)$

$\theta 3$

10

$P_c : (X_c, Y_c, Z_c)$

Zg

Zp

OPERATION ORDER GAZING POINT DISTANCE

$\theta 2$

Yg

$(X_c, Y_c, 0)$

Yp

$(X_p, Y_p, 0)$

Cg

Q0

Xp

Xg

FIG. 24A

FIG. 24B

FIG. 25

START

INFORMATION
SETTING PROCESS — 2001

STANDARD TIME
CALCULATING
PROCESS — 2002

REPRODUCING
PROCESS — 2003

END

## FIG. 26

INFORMATION SETTING PROCESS — S2001

IS TARGET ASSEMBLY SPECIFIED? — S2101

NO

YES

DETECT NUMBER N OF MODELS IN IMMEDIATELY LOWER HIERARCHY OF TARGET ASSEMBLY — S2102

ACQUIRE LIST STRUCTURE OF TARGET ASSEMBLY — S2103

$i = 1$ — S2104

$i > N$ ? — S2105

YES

S2002

NO

SELECT LAST NODE FROM UNSELECTED NODES IN LIST STRUCTURE OF TARGET ASSEMBLY — S2106

EXTRACT TYPE FLAG FROM SELECTED NODE — S2107

MODEL? — S2108

NO

YES

DETECT DISASSEMBLY DIRECTION — S2109

SET VIEWPOINT — S2110

SET MOVEMENT AMOUNT — S2111

$i = i+1$ — S2112

## FIG. 27

STANDARD TIME CALCULATING PROCESS — S2002

IS TARGET ASSEMBLY SPECIFIED? — S2201

NO

YES

DETECT NUMBER N OF MODELS IN IMMEDIATELY LOWER HIERARCHY OF TARGET ASSEMBLY — S2202

ACQUIRE LIST STRUCTURE OF TARGET ASSEMBLY — S2203

$j = 1$ — S2204

$j > N$ ? — S2205

YES → ①

NO

SELECT UNSELECTED NODE IN LIST STRUCTURE OF TARGET ASSEMBLY — S2206

EXTRACT TYPE FLAG FROM SELECTED NODE — S2207

MODEL? — S2208

NO

YES

CALCULATE AND STORE ZENITH ANGLE, AZIMUTH ANGLE, VIEWPOINT ANGLE, OPERATION ORDER GAZING POINT DISTANCE, WORKER VISUAL RANGE, AND WORKER SIGHT LINE ANGLE OF SELECTED NODE IN STANDARD TIME CALCULATING TABLE — S2209

$j = j+1$ — S2210

FIG. 28

① 

SELECT NODE THAT IS MODEL —— S2211

DOES NODE THAT IS MODEL EXIST IN LOWER HIERARCHY OF SELECTED NODE? —— S2212

NO

YES

CALCULATE DIFFERENCE VALUES FOR EACH FIELD OF FIRST ANIMATION INFORMATION AND EACH FIELD OF SECOND ANIMATION INFORMATION BE- TWEEN SELECTED NODE AND NODE IN LOWER HIERARCHY OF SELECTED NODE —— S2213

HAVE ALL NODES THAT ARE MODELS BEEN SELECTED AS SELECTED NODE? —— S2214

NO

YES

CALCULATE WORKER VISUAL RANGE ERROR TIME AND WORKER SIGHT LINE ANGLE ERROR TIME —— S2215

CALCULATE ESTIMATES OF ZENITH ANGLE ERROR TIME, AZIMUTH ANGLE ERROR TIME, VIEWPOINT ANGLE ERROR TIME, AND OPERATION ORDER GAZING POINT DISTANCE ERROR TIME —— S2216

ADD UP WORKER VISUAL RANGE ERROR TIME AND WORKER SIGHT LINE ANGLE ERROR TIME TO CALCU- LATE ESTIMATE OF ERROR IN TIME IN FIRST ANIMATION —— S2217

ADD UP ZENITH ANGLE ERROR TIME, AZIMUTH ANGLE ERROR TIME, VIEWPOINT ANGLE ERROR TIME, AND OPERATION ORDER GAZING POINT DISTANCE ERROR TIME TO CALCULATE ESTIMATE OF ERROR IN TIME IN SECOND ANIMATION —— S2218

CALCULATE ESTIMATE OF ASSEMBLY TIME OF PRODUCT BY SIMULATION BY USING ESTIMATES OF ERROR IN TIME IN FIRST AND SECOND ANIMATIONS —— S2219

END

**EUROPEAN SEARCH REPORT**

Europäisches
Patentamt
European
Patent Office
Office européen
des brevets

Application Number

EP 14 15 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wikipedia: "Computer-aided design", INTERNET ARTICLE, 15 March 2013 (2013-03-15), XP055121053, Retrieved from the Internet: URL:http://en.wikipedia.org/w/index.php?title=Computer-aided_design&oldid=544276156 [retrieved on 2014-06-02] * the whole document * | 1-6 | INV. G06Q10/04 G06Q50/04 |
| X | Wikipedia: "Manufacturing process management", INTERNET ARTICLE, 14 March 2013 (2013-03-14), XP055121054, Retrieved from the Internet: URL:http://en.wikipedia.org/w/index.php?title=Manufacturing_process_management&oldid=544169862 [retrieved on 2014-06-02] * the whole document * | 1-6 | |
| X | DIRK STÖSSEL ET AL: "Feature and Viewpoint Selection for Industrial Car Assembly", 26TH DAGM SYMPOSIUM, TÜBINGEN, GERMANY, AUGUST 30 - SEPTEMBER 1, 2004. PROCEEDINGS, 1 September 2004 (2004-09-01), pages 528-535, XP055121044, ISBN: 978-3-54-022945-2 * the whole document * | 1-6 | TECHNICAL FIELDS SEARCHED (IPC)  G06Q |

-/--

The present search report has been drawn up for all claims

| Place of search | Date of completion of the search | Examiner |
|---|---|---|
| Munich | 3 June 2014 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Europäisches
Patentamt
European
Patent Office
Office européen
des brevets

**Application Number**

EP 14 15 2265

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AGRAWALA M ET AL: "Designing Effective Step-by-StepAssembly Instructions", ACM TRANSACTIONS ON GRAPHICS (TOG), ACM, US, vol. 22, no. 3, 27 July 2003 (2003-07-27), pages 828-837, XP002560899, ISSN: 0730-0301, DOI: 10.1145/882262.882352 [retrieved on 2009-12-14] * the whole document * ----- | 1-6 | |
| X | KAUFMAN S G ET AL: "The Archimedes 2 mechanical assembly planning system", ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, vol. 4, 22 April 1996 (1996-04-22), pages 3361-3368, XP010163249, DOI: 10.1109/ROBOT.1996.509225 ISBN: 978-0-7803-2988-1 * the whole document * ----- | 1-6 | |
| X | ZHA X F ET AL: "A PDES/STEP-based model and system for concurrent integrated design and assembly planning", COMPUTER AIDED DESIGN, ELSEVIER PUBLISHERS BV., BARKING, GB, vol. 34, no. 14, 1 December 2002 (2002-12-01), pages 1087-1110, XP004374402, ISSN: 0010-4485, DOI: 10.1016/S0010-4485(01)00186-5 * the whole document * ----- -/-- | 1-6 | TECHNICAL FIELDS SEARCHED (IPC) |

The present search report has been drawn up for all claims

| Place of search | Date of completion of the search | Examiner |
|---|---|---|
| Munich | 3 June 2014 | Krafft, Gerald |

EPO FORM 1503 03.82 (P04C01)

EP 2 782 052 A1

**EUROPEAN SEARCH REPORT**

Europäisches Patentamt
European Patent Office
Office européen des brevets

Application Number

EP 14 15 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Satyandra K Gupta ET AL: "An intelligent environment for simulating mechanical assembly operations", Proceedings of DETC'98 1998 ASME Design Engineering Technical Conferences September 13-16, 1998, Atlanta, Georgia, USA, 16 September 1998 (1998-09-16), XP055121048, Retrieved from the Internet: URL:http://www-preview.ri.cmu.edu/pub_file s/pub2/gupta_satyandra_1998_1/gupta_satyan dra_1998_1.pdf [retrieved on 2014-06-02] * the whole document * ----- | 1-6 | |
| X | JAYARAM S ET AL: "Virtual assembly using virtual reality techniques", COMPUTER AIDED DESIGN, ELSEVIER PUBLISHERS BV., BARKING, GB, vol. 29, no. 8, 1 August 1997 (1997-08-01) , pages 575-584, XP004089543, ISSN: 0010-4485, DOI: 10.1016/S0010-4485(96)00094-2 * the whole document * ----- | 1-6 | |
| X | US 6 099 573 A (XAVIER PATRICK G [US]) 8 August 2000 (2000-08-08) * figure 2 * ----- | 1-6 | TECHNICAL FIELDS SEARCHED (IPC) |
| X,D | JP 2007 200082 A (FUJITSU LTD) 9 August 2007 (2007-08-09) * figures 1-9 * ----- | 1-6 | |
| X | EP 0 981 101 A1 (MATSUSHITA ELECTRONICS CORP [JP]) 23 February 2000 (2000-02-23) * figure 14 * ----- -/-- | 1-6 | |

The present search report has been drawn up for all claims

| Place of search | Date of completion of the search | Examiner |
|---|---|---|
| Munich | 3 June 2014 | Krafft, Gerald |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 14 15 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 069879 A (RICOH KK) 2 April 2009 (2009-04-02) * the whole document * ----- | 1-6 | |

TECHNICAL FIELDS
SEARCHED (IPC)

The present search report has been drawn up for all claims

| Place of search | Date of completion of the search | Examiner |
|---|---|---|
| Munich | 3 June 2014 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 15 2265

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2014

| Patent document cited in search report | | | Publication date | Patent family member(s) | | | Publication date |
|---|---|---|---|---|---|---|---|
| US 6099573 | A | | 08-08-2000 | NONE | | | |
| JP 2007200082 | A | | 09-08-2007 | JP<br>JP | 4731335<br>2007200082 | B2<br>A | 20-07-2011<br>09-08-2007 |
| EP 0981101 | A1 | | 23-02-2000 | EP<br>US<br>WO | 0981101<br>6434438<br>9930258 | A1<br>B1<br>A1 | 23-02-2000<br>13-08-2002<br>17-06-1999 |
| JP 2009069879 | A | | 02-04-2009 | JP<br>JP | 4886640<br>2009069879 | B2<br>A | 29-02-2012<br>02-04-2009 |

EPO FORM P0459

For more details about this annex : see Official Journal of the European Patent Office, No. 12/82

**EP 2 782 052 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9300145 A
- WO 9930258 A
- JP 2007200082 A